# EUROPÄISCHE PATENTSCHRIFT

(11) **EP 3 884 094 B1**
(45) Veröffentlichungstag und Bekanntmachung des Hinweises auf die Patenterteilung: **29.11.2023**
(21) Anmeldenummer: 19716164.9
(22) Anmeldetag: 10.04.2019
(51) Int. Cl.: D03D 15/56, D03D 15/567

(54) **TEXTILES GEWEBEMATERIAL MIT SCHRUMPFEIGENSCHAFTEN SOWIE DESSEN VERWENDUNG**
TEXTILE WOVEN FABRIC MATERIAL WITH SHRINK PROPERTIES AND USE THEREOF
MATIÈRE TISSULAIRE TEXTILE AYANT DES PROPRIÉTÉS DE RÉTRACTATION ET UTILISATION DE CELLE-CI

(30) Priorität: 08.03.2019 WO PCT/EP2019/000070
(43) Veröffentlichungstag der Anmeldung: 29.09.2021
(73) Patentinhaber: Krall + Roth Services GmbH & Co. KG, 41066 Mönchengladbach (DE)
(72) Erfinder: SALZMANN, Oliver, 41066 Mönchengladbach (DE)
(74) Vertreter: Strehlke, Ingo Kurt
(86) Internationale Anmeldenummer: PCT/EP2019/059046
(87) Internationale Veröffentlichungsnummer: WO 2020/182319

(56) Entgegenhaltungen:
- DE-A1-102013 001 912
- DE-U1-202007 014 733
- US-A1- 2015 173 514

## Beschreibung

Die vorliegende Erfindung betrifft das technische Gebiet der funktionellen Textilmaterialien und deren Verwendung insbesondere im Bereich der Möbelindustrie, beispielsweise für Sitz- oder Liegemöbel, wie Stühle oder dergleichen, und zwar vorzugsweise zur Ausbildung von insbesondere unterbaufreien bzw. freitragenden Bespannungen bzw. Bezügen bevorzugt für Rückenlehnen bzw. Sitzteilen oder dergleichen.

Dabei betrifft die vorliegende Erfindung insbesondere das technische Gebiet textiler Flächenmaterialien mit Schrumpfeigenschaften, insbesondere Wärmeschrumpfeigenschaften.

In diesem Zusammenhang betrifft die vorliegende Erfindung ein textiles Flächengebilde bzw. Flächenmaterial, insbesondere ein textiles Bespannungsmaterial, in Form eines Gewebes, welches Wärmeschrumpfeigenschaften und elastische Eigenschaften aufweist und welches bevorzugt für Möbel, wie Sitz- bzw. Liegemöbel, eingesetzt werden kann, und zwar insbesondere als Bespannungsmaterial.

Weiterhin betrifft die vorliegende Erfindung auch die Verwendung des textilen Flächengebildes nach der Erfindung, welches in Form eines Gewebes vorliegt und welches Wärmeschrumpfeigenschaften und elastische Eigenschaften aufweist, zur Herstellung bzw. Erzeugung eines wärmegeschrumpften textilen Flächengebildes sowie ein Verfahren zur Herstellung des wärmegeschrumpften textilen Flächenmaterials.

Die vorliegende Erfindung betrifft auch die Verwendung des textilen Flächengebildes nach der Erfindung, welches in Form eines Gewebes vorliegt und welches Wärmeschrumpfeigenschaften und elastische Eigenschaften aufweist, im Bereich der Möbelindustrie, Automobilindustrie oder dergleichen sowie zur Herstellung von Möbelelementen, insbesondere Sitz- und/oder Liegemöbelelementen wie Rückenlehnen bzw. Sitzelementen, sowie zur Herstellung von dekorativen Elementen, Hohlraumkanälen, Automobilzubehör und dergleichen.

Weiterhin betrifft die vorliegende Erfindung auch ein Verfahren zur Herstellung von Möbelelementen, insbesondere Sitz- und/oder Liegemöbelelementen, wie Rückenlehnen bzw. Sitzelementen, sowie zur Herstellung von dekorativen Elementen, Hohlraumkanälen, Automobilzubehör und dergleichen unter Verwendung des textilen Flächengebildes nach der Erfindung, welches in Form eines Gewebes vorliegt und welches Wärmeschrumpfeigenschaften und elastische Eigenschaften aufweist.

Schließlich betrifft die vorliegende Erfindung auch Möbelelemente als solche, insbesondere Sitz- und/oder Liegemöbelelemente wie Rückenlehnen bzw. Sitzelemente, sowie darüber hinaus auch dekorative Elemente, Hohlraumkanäle, Automobilzubehör und dergleichen, welche das erfindungsgemäße textile Flächengebilde, welches in Form eines Gewebes ausgebildet ist und mit Wärmeschrumpfeigenschaften und elastischen Eigenschaften versehen ist, aufweisen.

Im Bereich der Möbelindustrie werden insbesondere bei der Herstellung von Sitz- bzw. Liegemöbel oftmals Bespannungen bzw. Bezugsstoffe eingesetzt, welche an entsprechenden Träger- bzw. Rahmenvorrichtungen (wie Spannrahmen oder dergleichen) fixiert bzw. hieran aufgespannt werden, beispielsweise um hierdurch Rückenlehnen oder Sitzelemente bzw. Sitzflächen für Sitzmöbel bzw. Liegeflächen für Liegemöbel oder dergleichen bereitzustellen.

Neben den hohen optischen bzw. haptischen Anforderungen werden an derartige textile Flächenmaterialien bzw. -gebilde, wie sie insbesondere als Bespannungen bzw. Bezugsstoffe von Träger- bzw. Rahmenvorrichtungen insbesondere zur Bereitstellung von Rückenlehnen oder Sitzelementen bzw. Sitzflächen für Sitzmöbel oder dergleichen eingesetzt werden, auch hohe Anforderungen hinsichtlich ihrer Stabilität bzw. mechanischen Eigenschaften gestellt:
In diesem Zusammenhang ist es nämlich insbesondere erforderlich, dass als Bespannungen eingesetzte textile Flächenmaterialien bzw. -gebilde eine hohe mechanische Stabilität aufweisen, um z. B. die bei der Verwendung als Rückenlehnen bzw. Sitzflächen oder als Liegeflächen bei entsprechender Belastung ("Hinsetzen" bzw. "Hinlegen") auftretenden Krafteinwirkungen bzw. Lasten aufnehmen zu können. Dabei ist auch eine wesentliche Anforderung darin zu sehen, dass die hierzu eingesetzten textilen Flächenmaterialien bzw. -gebilde auch über entsprechende (Dehn-)Erholungseigenschaften verfügen, und zwar insbesondere was die Rückstellung des Materials nach erfolgter Belastung sozusagen in die Ausgangsposition bzw. -ebene anbelangt, wobei hierzu auch die Materialspannung auf der Träger- bzw. Rahmenvorrichtung aufrechterhalten werden soll, um ein dauerhaftes Ausbeulen oder Durchhängen des Flächenmaterials bzw. -gebildes zu verhindern. Dabei soll insbesondere ein Verlust an (Eigen-)Spannung auch nach intensiver bzw. langfristiger Nutzung bzw. Beanspruchung, wie sie beispielsweise für Sitz- bzw. Liegemöbel vorliegt, vermieden werden.

Auch von daher werden an als Bespannungen bzw. Bezugsstoffe eingesetzte textile Flächenmaterialien bzw. -gebilde auch hohe Anforderungen insofern gestellt, als die Materialien eine hohe Elastizität bzw. reversible Dehnfähigkeit aufweisen sollen. Denn hierdurch wird zum einen das Aufspannverhalten bei Herstellung der entsprechenden Produkte als auch die Rückstellung des Materials nach erfolgter mechanischer Belastung verbessert.

Weiterhin ist es für als Bespannungen bzw. Bezugsstoffe eingesetzte Textilflächenmaterialien grundsätzlich auch erforderlich, dass insbesondere im Hinblick auf die Herstellung von Sitz- bzw. Liegemöbeln ein hoher Sitz- bzw. Liegekomfort, d. h. eine entsprechend hohe Ergonomie, bereitgestellt wird, wobei gleichzeitig auch eine hohe Bequemlichkeit gewährleistet sein soll. Dies kann insbesondere durch eine variable und unter Sitz- bzw. Liegebeanspruchung ("Hinsetzen", "Hinlegen") auftretende Anpassung entsprechender Bespannungen bzw. Bezüge an die Körperformgebung bzw. -kontur eines Nutzers bereitgestellt werden.

Insgesamt kommen auch den Verarbeitungseigenschaften textiler Flächengebilde, wie sie insbesondere als Bespannungen bzw. Bezüge von Träger- bzw. Rahmenvorrichtungen beispielsweise für Sitz- bzw. Liegemöbel eingesetzt werden, eine hohe Bedeutung zu. So ist das Verhalten der entsprechenden Materialien bei dem Anbringen bzw. Aufspannen auf den entsprechenden Träger- bzw. Rahmenvorrichtungen insofern relevant, als hierdurch sicherzustellen ist, dass dauerhaft falten- und beulenfreie Bespannungen bzw. Bezüge bereitgestellt werden. Insbesondere ist eine übermäßige Faltenbildung sowie eine zu geringe Aufspannkraft bzw. ein damit einhergehendes Ausbeulen der Bespannung bzw. des Bezuges problematisch, da dies mit unerwünschten Produkteigenschaften und einer minderwertigen Produktqualität einhergeht.

Vor diesem Hintergrund ist es im Stand der Technik versucht worden, einer Faltenbildung bzw. unzureichenden Spannkraft durch die Ausbildung entsprechend exakter Zuschnitte bzw. Nähereien hinsichtlich der eingesetzten textilen Flächenmaterialien entgegenzuwirken. Dabei besteht ein Ansatz im Stand der Technik auch darin, entsprechende Bespannungen bzw. Bezüge unter Verwendung mehrerer textiler Abschnitte, welche untereinander vernäht werden, auszubilden, um auf dieser Basis eine gewisse geometrische Anpassung an die Formgebung einer Träger- bzw. Rahmenvorrichtung zu ermöglichen.

Die vorgenannten Maßnahmen gehen jedoch im Allgemeinen mit einer verschlechterten Verfahrensökonomie einher und führen nicht immer zu den gewünschten Produkteigenschaften. So ist bereits die Ausbildung entsprechender Zuschnitte und Nähereien produktionstechnisch aufwendig. Nachteilig ist in diesen Zusammenhang auch, dass mitunter eine nur eingeschränkte Formgebung bzw. Gestaltungsfreiheit entsprechender Bespannungen bzw. Bezüge realisiert werden kann, wobei der Zuschnitt zudem nur im Hinblick auf eine jeweils spezielle Träger- bzw. Rahmenvorrichtung angepasst werden kann. Weiterhin stellen entsprechende Nahtverbindungen, wie sie bei mehrteiliger Ausbildung von Bezügen bzw. Bespannungen zum Einsatz kommen, um hierdurch eine entsprechende Formanpassung zu ermöglichen, mitunter Schwachstellen hinsichtlich der Belastbarkeit und Dauerhaftigkeit der eingesetzten Materialien dar. Zudem können derartige Nahtverbindungen mitunter auch nachteilig in Bezug auf optische sowie haptische Eigenschaften sein. Im Hinblick auf das Vorliegen von mehrteiligen Zuschnitten und Nahtverbindungen verhält es sich zudem oftmals auch derart, dass mitunter eine unerwünschte Faltenbildung bzw. Ausbeulung insbesondere im Bereich von komplexeren Strukturen bzw. Formgebungen, wie im Bereich von Ecken, Verjüngungen, Bögen oder dergleichen von Träger- bzw. Rahmenvorrichtungen, auftreten kann. Auch weisen derartige Materialien oftmals auch keine konkreten Maßnahmen zur dauerhaften Verhinderung eines Spannungsverlustes bzw. Ausbeulens auf.

Zudem ist es bei im Stand der Technik zur Herstellung der in Rede stehenden Bespannungen bzw. Bezüge gegebenenfalls vorgesehen, dass das zu verarbeitende Textilmaterial unter (Vor-)Spannung auf eine Träger- bzw. Rahmenvorrichtung aufgebracht bzw. hieran befestigt wird, was jedoch nicht immer zu den gewünschten Ergebnissen führt. Zudem wird im Stand der Technik eine Aufspannung bzw. Fixierung an einer Träger- bzw. Rahmenvorrichtung, beispielsweise in Form eines Kederrahmens oder dergleichen, oftmals nur durch ein aufwendiges Annähen oder Ankleben des Textilmaterials ermöglicht, was gleichermaßen mit herstellungsspezifischen Nachteilen einhergeht.

Um im Hinblick auf den Einsatz als Bespannungen entsprechender Träger- bzw.

Rahmenvorrichtungen die Faltenbildung zu verringern, kann es im Stand der Technik in diesem Zusammenhang im Allgemeinen vorgesehen sein, Textilmaterialien einzusetzen, welche über eine gewisse Dehnbarkeit verfügen. Derartige Materialien eignen sich aber grundsätzlich nicht zur Verwendung für solche Bezüge bzw. Bespannungen, welche insbesondere randseitig an eine Träger- bzw. Rahmenvorrichtung befestigt werden, zumal derartige Textilmaterialien mitunter nicht die für eine dauerhafte und funktionale Bespannung erforderliche (Eigen-)Spannkraft aufweisen.

Die WO 03/047395 A1 bzw. die zu derselben Patentfamilie gehörende EP 1 450 649 A1 bzw. die gleichermaßen zu derselben Patentfamilie gehörende US 2003/122411 A1 betrifft einen dehnbaren Überzug für ein elastisches Kissen, wobei der Überbezug eine gewisse elastische Rückstellkraft aufweisen soll.

Die DE 20 2007 014 733 U1 betrifft ein textiles Flächenmaterial gemäß dem Oberbegriff des Anspruchs 1 mit einer Vielzahl von das Flächenmaterial ausbildenden Garnsystemen, wobei das textile Flächenmaterial mindestens ein wärmschrumpfbares Kunststoffgarn aufweist.

Weiterhin betrifft die US 2015/0173514 A1 einen Stuhl mit einer Körperstützstruktur mit einer Membran, die eine Körperstützfläche bildet, wobei die Körperstützstruktur ein Rahmenelement in einer dreidimensionalen Form umfasst. Die Membran ist mit deren Umfangskantenabschnitt an dem Rahmenelement ohne Spannung oder mit einer solchen Spannung befestigt, die geringer ist als die für die Körperstützfläche erforderliche Spannung. Die Membran soll zudem unterschiedliche Wärmeschrumpfeigenschaften bzw. -verhältnisse aufweisen. Die Membran wird zum Aufbau einer für die Körperstützfläche erforderlichen Spannung durch Erhitzen wärmegeschrumpft, wobei die Wärmeschrumpfung der Membran zu einer dreidimensionalen Körperstützfläche entlang der Form des Rahmenelements führt.

Die DE 10 2013 001 912 A1 betrifft ein Verfahren zur Herstellung einer Bespannung für ein Möbel, wobei die Bespannung wenigstens einen Schussfaden aus einem Kunststoff und Kettfäden aus einem Kunststoff umfasst, wobei die Bespannung nach einer Konfektion für das Möbel in einem ersten Schritt knitterfrei ausgebreitet wird und wobei die Bespannung in einem zweiten Schritt in wenigstens einem Bereich, in welchem die Bespannung nach dem Aufspannen auf das Möbel durch einen Rahmen des Möbels eine gegenüber angrenzenden Bereichen geringe Spannkraft erfährt, einer Wärmebehandlung unterzogen wird, wobei die Wärmebehandlung bezüglich einer Behandlungstemperatur und einer Behandlungsdauer derart ausgeführt wird, dass in der Bespannung in dem behandelten Bereich ein Schrumpfprozess ausgelöst wird.

Insgesamt besteht im Stand der Technik ein großer Bedarf nach technischen bzw. funktionalen textilen Flächengebilden bzw. -materialien, welche sich für die Verwendung als Bespannungs- bzw. Bezugsmaterial insbesondere für Sitz- bzw. Liegemöbel oder dergleichen eignen, sowie nach leistungsfähigen Verfahren zur Bereitstellung entsprechender textiler Bezugs- bzw. Bespannungsmaterialien, wobei leistungsfähige Produkten bereitgestellt werden sollen, welche anschließend einer Endverarbeitung (insbesondere Bespannung entsprechender Träger- bzw. Rahmenvorrichtungen, insbesondere von Sitz- bzw. Liegemöbeln oder dergleichen) zugeführt werden können, wobei gleichzeitig eine hohe Flexibilität und Variabilität hinsichtlich der konkreten Ausbildung der bereitgestellten Produkte bei gleichzeitig hoher Verfahrensökonomie und Kosteneffizienz gefordert ist, was im Stand der Technik so mitunter nicht immer in einem ausreichenden Maß gegeben ist.

Vor diesem Hintergrund besteht somit eine Aufgabe der vorliegenden Erfindung darin, ein spezielles textiles Flächengebilde bzw. Flächenmaterial bereitzustellen, welches die zuvor geschilderten Nachteile des Standes der Technik zumindest weitgehend vermeidet oder aber wenigstens abschwächt bzw. welches die zuvor angeführten hohen technischen Anforderungen insbesondere in Bezug auf den Einsatz als Bespannungs- bzw. Bezugsmaterial erfüllt. Insbesondere soll im Rahmen der vorliegenden Erfindung ein textiles Flächengebilde bzw. Flächenmaterial bereitgestellt werden, welches sich insbesondere als Bezugs- bzw. Bespannungsmaterial für Sitz- bzw. Liegemöbel oder dergleichen und diesbezüglich insbesondere zur Ausbildung bzw. Bereitstellung von Rückenlehnen bzw. Sitzelementen bzw.-flächen von Sitzmöbel bzw. von Liegeflächen von Liegemöbeln eignet.

Eine weitere Aufgabe der vorliegenden Erfindung ist auch darin zu sehen, ein textiles Flächengebilde bzw. Flächenmaterial bereitzustellen, welches insbesondere bei der Verwendung als Bezugs- bzw. Bespannungsmaterial einen dauerhaft faltenfreien Bezug bzw. eine entsprechend dauerhaft faltenfreie Bespannung von entsprechenden Träger- bzw. Rahmenvorrichtungen bzw. -konstruktionen, insbesondere für Sitz- oder Liegemöbel, wie Stühle, oder dergleichen, ermöglichen soll. Dabei soll das erfindungsgemäß bereitgestellte textile Flächengebilde bzw. -material bei gleichzeitig hoher (Eigen-)Spannung über eine hohe Elastizität bzw. über eine hohe reversible Dehnbarkeit mit damit einhergehenden Dehnerholungseigenschaften auch nach erfolgter hoher kraftmäßiger Beanspruchung verfügen, wobei diese Eigenschaften auch dauerhaft vorliegen sollen.

Eine wiederum weitere Aufgabe der vorliegenden Erfindung ist zudem auch darin zu sehen, ein spezielles textiles Flächengebilde bzw. Flächenmaterial bereitzustellen, welches bei gleichzeitig hoher Belastungsfähigkeit bzw. Stabilität insbesondere im Rahmen der Verwendung als Bezugs- bzw. Bespannungsmaterial, vorzugsweise für Sitzmöbel, Liegemöbel oder dergleichen, eine hohe Bequemlichkeit bzw. verbesserte ergonomische Eigenschaften aufweist.

Darüber hinaus ist eine nochmals weitere Aufgabe der vorliegenden Erfindung auch darin zu sehen, ein textiles Flächengebilde bzw. Flächenmaterial bereitzustellen, welches einen vereinfachten Aufbau unter Verwendung einer verringerten Anzahl an das Flächengebilde bzw. Flächenmaterial ausbildenden Komponenten aufweist. Dabei sollen auch die Produkt- bzw. Materialeigenschaften im Hinblick auf dessen Verarbeitung und Verwendung optimiert sein, und zwar insbesondere was die Bereitstellung dauerhafter Bespannungen bzw. Bezüge, welche eine hohe Faltenfreiheit, Eigenspannung und ergonomische Anpassbarkeit bei gleichzeitig hervorragenden (Dehn-)Erholungseigenschaften aufweisen, anbelangt.

Insbesondere soll sich das erfindungsgemäß bereitgestellte textile Flächengebilde bzw. Flächenmaterial dabei zur Herstellung von unterbaufreien bzw. freitragenden Bezügen bzw. Bespannungen eignen, welche insbesondere randseitig an entsprechenden Träger- bzw. Rahmenvorrichtungen bzw. -strukturen befestigt bzw. fixiert sind.

In diesem Zusammenhang ist eine nochmals weitere Aufgabe der vorliegenden Erfindung auch darin zu sehen, ein insgesamt produktionstechnisch vereinfachtes und kostenmäßig optimiertes Verfahren zur Herstellung entsprechender Produkte, wie Sitz- oder Liegemöbel, unter Bereitstellung entsprechender Bespannungen bzw. Bezüge auf Basis des textilen Flächengebildes bzw. Flächenmaterials nach der Erfindung bereitzustellen.

Insgesamt ist dabei auch eine Aufgabe der vorliegenden Erfindung darin zu sehen, ein solches textiles Flächengebilde bzw. Flächenmaterial bereitzustellen, welches derart konstruiert bzw. ausgerüstet ist, dass auf dieser Basis insbesondere dauerhaft faltenfreie und kraftmäßig beanspruchbare Bespannungen bzw. Bezüge von Träger- bzw. Rahmenvorrichtungen bzw. -konstruktionen insbesondere für Sitz- oder Liegemöbel oder dergleichen ermöglicht werden, wobei auch nach kraftmäßiger Beanspruchung eine hohe Eigenspannung des Bezugs bzw. der Bespannung vorliegen soll, um ein diesbezügliches Ausbeulen oder dergleichen zu verhindern.

Die Anmelderin hat nun in völlig überraschender Weise herausgefunden, dass die vorgenannte Aufgabenstellung der vorliegenden Erfindung durch ein spezielles textiles Flächengebilde (synonym auch als Flächenmaterial bezeichnet), insbesondere textiles Bespannungsmaterial, gelöst wird, welches in Form eines Gewebes vorliegt, bevorzugt für Möbel, wie Sitz- bzw. Liegemöbel, wobei das textile Flächengebilde nach der Erfindung in ziel- und zweckgerichteter Weise mit definierten Wärmeschrumpfeigenschaften und elastischen Eigenschaften ausgerüstet ist.

In diesem Zusammenhang handelt es sich bei dem textilen Flächengebilde nach der Erfindung um ein textiles Gewebe mit Wärmeschrumpfeigenschaften und mit elastischen Eigenschaften, welches als Bespannungsmaterial bzw. Bezugsmaterial für Möbel, wie Sitz- bzw. Liegemöbel, eingesetzt werden kann.

Mit anderen Worten wird somit im Rahmen der vorliegenden Erfindung auf ein spezielles textiles Flächengebilde bzw. Flächenmaterial mit Wärmeschrumpfeigenschaften und mit elastischen Eigenschaften abgestellt, wobei das erfindungsgemäß bereitgestellte textile Flächengebilde als textiles Gewebe mit Wärmeschrumpfeigenschaften und mit elastischen Eigenschaften ausgebildet ist.

Dabei zeichnet sich das textile Flächengebilde dadurch aus, dass dieses aus einem das textile Flächengebilde ausbildenden Garnsystem, insbesondere einem Garnverbund, mit einer Vielzahl an Schussfäden (synonym auch als Schüsse bezeichnet) und einer Vielzahl an Kettfäden (synonym auch als Ketten bezeichnet) besteht. Zudem zeichnet sich das textile Flächengebilde nach der Erfindung auch dadurch aus, dass das Garnsystem, insbesondere der Garnverbund, mindestens ein wärmeschrumpfbares elastisches Kunststoffgarn, welches auch nach erfolgter Wärmeschrumpfbehandlung seine elastischen Eigenschaften zumindest teilweise behält, aufweist oder hieraus besteht.

In diesem Zusammenhang wird die zuvor geschilderte Aufgabe im Rahmen der vorliegenden Aufgabe somit - gemäß einem **ersten** Erfindungsaspekt - durch ein textiles Flächengebilde bzw. Flächenmaterial, insbesondere textiles Bespannungsmaterial, in Form eines Gewebes, bevorzugt für Möbel, wie Sitz- bzw. Liegemöbel, mit Wärmeschrumpfeigenschaften und elastischen Eigenschaften, gemäß dem entsprechenden unabhängigen Anspruch gelöst. Weitere, vorteilhafte Ausgestaltungen des erfindungsgemäßen textilen Flächengebildes mit Wärmeschrumpfeigenschaften und elastischen Eigenschaften sind Gegenstand der diesbezüglichen Unteransprüche.

Wiederum weiterer Gegenstand der vorliegenden Erfindung - gemäß einem **zweiten** Aspekt der vorliegenden Erfindung - ist die Verwendung des textilen Flächengebildes nach Erfindung, welches Wärmeschrumpfeigenschaften und elastische Eigenschaften aufweist, zur Erzeugung bzw. Herstellung eines vorliegend beschriebenen wärmegeschrumpften textilen Flächengebildes.

Zudem ist weiterer Gegenstand der vorliegenden Erfindung - gemäß einem **dritten** Aspekt der vorliegenden Erfindung - das Verfahren zur Herstellung eines vorliegend beschriebenen wärmegeschrumpften textilen Flächengebildes.

Nochmals weiterer Gegenstand der vorliegenden Erfindung - gemäß einem **vierten** Aspekt der vorliegenden Erfindung - ist zudem die Verwendung des textilen Flächengebildes mit Wärmeschrumpfeigenschaften und mit elastischen Eigenschaften im Bereich der Möbelindustrie, Automobilindustrie oder der dergleichen gemäß dem diesbezüglichen unabhängigen Patentanspruch.

Weiterer Gegenstand der vorliegenden Erfindung - gemäß einem **fünften** Aspekt der vorliegenden Erfindung - ist weiterhin die Verwendung des textilen Flächengebildes mit Wärmeschrumpfeigenschaften und mit elastischen Eigenschaften zur Herstellung von Möbelelementen bzw. zur Herstellung von dekorativen Elementen, Hohlraumkanälen, Automobilzubehör oder dergleichen gemäß dem diesbezüglichen unabhängigen Patentanspruch.

Gegenstand der vorliegenden Erfindung ist zudem - gemäß einem **sechsten** Aspekt der vorliegenden Erfindung - das Verfahren zur Herstellung von Möbelelementen bzw. zur Herstellung von dekorativen Elementen, Hohlraumkanälen, Automobilzubehör oder dergleichen gemäß dem diesbezüglichen unabhängigen Patentanspruch.

Schließlich sind Gegenstand der vorliegenden Erfindung - gemäß einem **siebten** Aspekt der vorliegenden Erfindung - Möbelelemente, dekorative Elemente, Hohlraumkanäle, Automobilzubehör oder dergleichen gemäß dem diesbezüglichen unabhängigen Patentanspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen im Rahmen der Ansprüche von den angegebenen Bereichen bzw. Angaben abgewichen werden kann.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d. h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von erfindungsgemäße Ausführungsformen bzw. Ausführungsbeispiele darstellenden Zeichnungen bzw. Figurendarstellungen. Im Zusammenhang mit der Erläuterung dieser bevorzugten Ausführungsformen bzw. Ausführungsbeispiele der vorliegenden Erfindung, welche jedoch in Bezug auf die vorliegende Erfindung keinesfalls beschränkend sind, werden auch weitergehende Vorteile, Eigenschaften und Merkmale der vorliegenden Erfindung aufgezeigt.

Gegenstand der vorliegenden Erfindung - gemäß einem ersten Aspekt der vorliegenden Erfindung ist somit ein textiles Flächengebilde (Flächenmaterial), insbesondere textiles Bespannungsmaterial, in Form eines Gewebes, bevorzugt für Möbel, wie Sitz- und/oder Liegemöbel, mit Wärmeschrumpfeigenschaften und elastischen Eigenschaften, insbesondere textiles Gewebe mit Wärmeschrumpfeigenschaften und elastischen Eigenschaften als Bespannungsmaterial für Möbel wie Sitz- und/oder Liegemöbel, wobei das textile Flächengebilde aus einem das textile Flächengebilde ausbildenden Garnsystem, insbesondere einen Garnverbund, mit einer Vielzahl an Schussfäden (Schüssen) und einer Vielzahl an Kettfäden (Ketten) besteht, wobei das Garnsystem mindestens ein wärmeschrumpfbares elastisches Kunststoffgarn, welches auch nach erfolgter Wärmeschrumpfbehandlung seine elastischen Eigenschaften zumindest teilweise beibehält, aufweist oder hieraus besteht, wobei das wärmeschrumpfbare elastische Kunststoffgarn auf Basis eines wärmeschrumpfbaren elastomeren und thermoplastischen Polyesters ausgebildet ist, wobei das wärmeschrumpfbare elastische Kunststoffgarn eine Bruchdehnung von mehr als 55 % bei 20 °C, bestimmt gemäß DIN EN ISO 2062:2010-04, aufweist, wobei das Garnsystem frei von nichtwärmeschrumpfbaren elastischen Kunststoffgarnen ist und wobei das Flächengebilde in Schussrichtung und in Kettrichtung elastisch ausgebildet ist.

Eine grundlegende Idee der vorliegenden Erfindung ist somit darin zu sehen, dass erfindungsgemäße textile Flächengebilde, welche in Form eines Gewebes ausgebildet ist, in zweckgerichteter Art und Weise mit einem speziellen Kunststoffgarn (synonym auch als "wärmeschrumpfbarer elastischer Kunststofffaden", "wärmeschrumpfbares elastisches synthetisches Garn", "wärmeschrumpfbarer elastischer synthetischer Faden", "wärmeschrumpfbares elastisches Synthetikgarn" oder "wärmeschrumpfbarer elastischer Synthetikfaden" bezeichnet) auszurüsten, welches nämlich sowohl wärmeschrumpfbar als auch elastisch ist.

Dabei verhält es sich in Bezug auf das erfindungsgemäß eingesetzte spezielle wärmeschrumpfbare elastische Kunststoffgarn zudem derart, dass dieses auch nach erfolgter Wärmeschrumpfbehandlung seine elastischen Eigenschaften zumindest teilweise beibehält. Folglich weist das textile Flächengebilde nach der Erfindung Wärmeschrumpfeigenschaften und elastische Eigenschaften auf bzw. ist das erfindungsgemäße textile Flächengebilde wärmeschrumpfbar und elastisch, wobei die Elastizitätseigenschaften auch nach erfolgter Wärmeschrumpfung zumindest teilweise beibehalten sind. Folglich weist auch das resultierende wärmegeschrumpfte Flächengebilde hervorragende elastische Eigenschaften auf (da die Elastizitätseigenschaften des speziellen Kunststoffgarns ihren Niederschlag auch in dem wärmegeschrumpften Flächengebilde finden).

Erfindungsgemäß ist somit insbesondere der Fall, dass das erfindungsgemäße textile Flächengebilde als solches aufgrund des Vorliegens des speziellen wärmeschrumpfbaren elastischen Kunststoffgarns auch nach erfolgter Wärmeschrumpfbehandlung des textilen Flächengebildes seine elastischen Eigenschaften zumindest teilweise beibehält.

Die vorliegende Erfindung stellt dabei insbesondere darauf ab, dass sowohl die Wärmeschrumpfeigenschaften als auch die elastischen Eigenschaften des erfindungsgemäßen textilen Flächengebildes durch ein und dieselbe Komponente des Flächengebildes, nämlich durch das spezielle Kunststoffgarn, bereitgestellt wird.

Dabei geht die vorliegende Erfindung aufgrund der Verwendung eines sowohl wärmeschrumpfbaren als auch elastischen Kunststoffgarns mit einer vereinfachten Konstruktion bzw. einem vereinfachten Aufbau des erfindungsgemäßen textilen Flächengebildes einher, und zwar auch dahingehend, dass die Anzahl der das Flächengebilde ausbildenden Komponenten bzw. Bestandteile verringert werden kann. Hierdurch ist weiterführend auch eine Verringerung des Flächengewichts des erfindungsgemäßen textilen Flächengebildes möglich, und zwar ohne die Funktionalität oder Stabilität des Materials negativ zu beeinflussen.

Ein weiterer Vorteil, welcher mit der speziellen Verwendung eines wärmeschrumpfbaren elastischen Kunststoffgarns, wie vorliegend beschreiben, einhergeht, ist zudem darin zu sehen, dass die entsprechenden Wärmeschrumpfeigenschaften und elastischen Eigenschaften des erfindungsgemäßen textilen Flächengebildes in verbesserter Weise eingestellt bzw. maßgeschneidert werden können, was wiederum der weiteren Verarbeitung mit dem Aufbringen auf entsprechende Träger- bzw. Rahmenvorrichtungen zur Ausbildung faltenfreier Bezüge bzw. Bespannungen zuträglich ist.

Zudem ist das erfindungsgemäße textile Flächengebilde aufgrund der geringen Anzahl an Komponenten relativ kostengünstig herzustellen, und zwar sowohl im Hinblick auf geringe Kosten für die einzusetzenden Materialien als auch im Hinblick auf das zugrundeliegende Herstellungsverfahren für das textile Flächengebilde nach der Erfindung. Somit ist auch die Herstellung des Flächengebildes nach der Erfindung vereinfacht.

Aufgrund seiner speziellen Eigenschaften eignet sich das erfindungsgemäße textilen Flächengebilde beispielsweise im Bereich der Möbelindustrie insbesondere zur Herstellung von Sitz- bzw. Liegemöbeln oder dergleichen (und diesbezüglich insbesondere zur Herstellung von Rückenlehnen, Sitz- bzw. Liegeflächen), aber auch zur Verwendung in der Automobilindustrie oder dergleichen. Insbesondere eignet sich das erfindungsgemäße textile Flächengebilde zur Bespannung von Träger- bzw. Rahmenvorrichtungen bzw. -elementen, wie Trägerrahmen oder dergleichen. In diesem Zusammenhang kann das textile Flächengebilde nach der Erfindung beispielsweise randseitig auf bzw. an einer derartigen Träger- bzw. Rahmenvorrichtung fixiert werden und nachfolgend einem Schrumpfungsprozess unterzogen werden, wobei eine dauerhafte und kraftmäßig beanspruchbare sowie faltenfreie Bespannung bzw. ein diesbezüglicher Bezug resultiert. Dabei weist eine solche Bespannung bzw. ein solcher Bezug aufgrund seiner auch nach Schrumpfung weiterhin vorhandenen elastischen Eigenschaften auch hervorragende Dehnerholungseigenschaften sowie eine hohe (Eigen-)Spannung bzw. aufgrund der hervorragenden Anpassung an Körperkonturen oder dergleichen auch eine hohe (Sitz-)Ergonomie auf.

Dabei können erfindungsgemäß insbesondere freitragende bzw. unterbaufreie Bespannungen bzw. Bezüge bereitgestellt werden, welche insbesondere randseitig an entsprechende Träger- bzw. Rahmenvorrichtungen befestigt sind, wie zuvor angeführt. Dabei ist es im Rahmen der vorliegenden Erfindung nicht zuletzt aufgrund der hervorragenden kraftmäßigen Belastungsfähigkeit und den hervorragenden Dehnerholungseigenschaften des textilen Flächengebildes nicht erforderlich, im Rahmen der Ausbildung von Bespannungen bzw. Bezügen zusätzliche Stützstrukturen oder dergleichen, wie Schaumstoffpolster oder Trägerplatten, einzusetzen, da das textile Flächengebilde gewissermaßen direkt und ohne weitere stabilisierende Maßnahmen auf eine Träger- bzw. Rahmenvorrichtung sozusagen frei aufgespannt werden kann. Grundsätzlich ist jedoch ein späteres bzw. nachfolgendes Aufpolstern dennoch nicht ausgeschlossen.

Ein weiterer Vorteil der vorliegenden Erfindung ist zudem darin zu sehen, dass das erfindungsgemäße textile Flächengebilde, welches als Gewebe ausgebildet ist, gewissermaßen direkt auf eine Träger- bzw. Rahmenvorrichtung, beispielsweise einen Spannrahmen, aufgebracht bzw. hieran insbesondere randseitig fixiert werden kann, und zwar ohne dass diesbezüglich ein exakter Zuschnitt bzw. eine exakte Näherei hinsichtlich des textilen Flächengebildes erforderlich ist. Denn durch das vorzugsweise nach dem Aufbringen bzw. Fixieren des textilen Flächengebildes auf eine Träger- bzw. Rahmenvorrichtung erfolgte Wärmeschrumpfen wird aufgrund der Wärmeschrumpfeigenschaften das textile Flächenmaterial nach der Erfindung gewissermaßen aufgespannt und somit glattgezogen bzw. unter (Eigen-)Spannung gesetzt, so dass folglich ein zumindest im Wesentlichen faltenfreier Bezug bzw. eine faltenfreie Bespannung resultiert. Durch den Wärmeschrumpfungsprozess wird folglich eine gewisse Eigenspannung des auf eine Träger- bzw. Rahmenkonstruktion aufgebrachten bzw. hieran fixierten textilen Flächengebildes nach der Erfindung aufgebaut, welche durch die vorliegende hohe Elastizität nochmals vergrößert wird, so dass auch aufgrund der Vorspannung eine hohe kraftmäßige Belastbarkeit resultiert.

Aufgrund der vorliegenden (Eigen-)Spannung resultiert zudem eine hohe kraftmäßige Belastbarkeit, ohne dass das erfindungsgemäße textile Flächengebilde übermäßig bzw. irreversibel gedehnt bzw. ausgebeult wird.

Infolge der hohen bzw. definierten Elastizität des textilen Flächengebildes nach der Erfindung, welche auch nach erfolgter Wärmeschrumpfung vorliegt, ist es gleichermaßen gewährleistet, dass sich das textile Flächengebilde nach der Erfindung, welches in wärmegeschrumpfter Form auf einer Träger- bzw. Rahmenvorrichtung, beispielsweise einer Sitzfläche eines Stuhls oder dergleichen, aufgebracht ist, sich ergonomisch an die Körperkontur im Benutzungszustand anpassen kann, was mit einer hohen Bequemlichkeit und hervorragenden Ergonomie einhergeht. Zudem resultieren hier aufgrund der definierten Elastizität auch entsprechende Rückstelleigenschaften nach kraftmäßiger Beanspruchung, so dass auch von daher dauerhaft faltenfreie Bespannungen bzw. Bezüge bereitgestellt werden können. In diesem Zusammenhang weist das erfindungsgemäße textile Flächenmaterial auch im wärmegeschrumpften Zustand hervorragende Dehnerholungseigenschaften infolge hoher Rückstellkräfte auf, was einem Ausbeulen oder dergleichen entsprechend entgegenwirkt.

Ein weiterer Vorteil des textilen Flächengebildes nach der Erfindung ist zudem darin zu sehen, dass aufgrund der Wärmeschrumpfeigenschaften eine hohe Flexibilität in Bezug auf die zu beziehende bzw. zu bespannende Träger- bzw. Rahmenvorrichtung vorliegt, wobei auch stark ausgeprägte Geometrien bzw. Formgebungen und Konturen, wie Verjüngungen, Bögen, Biegungen und dergleichen in effektiver Weise unter Vermeidung einer übermäßigen Faltenbildung bedeckt (insbesondere auf die Randbereiche) bzw. bespannt werden können.

Ein weiterer Vorteil des erfindungsgemäßen textilen Flächengebildes ist zudem darin zu sehen, dass hohe Schiebewindwiderstände in Bezug auf die das Flächengebilde ausbildenden Komponenten bzw. Garne vorliegen, was gleichermaßen zu einer entsprechenden Stabilitätserhöhung und verbesserten kraftmäßigen Beanspruchung, einhergehend mit einer verringerten Ausbeulung, fü h rt.

Erfindungsgemäß wird unter dem Begriff "wärmeschrumpfbar" bzw. "Wärmeschrumpf' bzw. "Wärmeschrumpfeigenschaften" eine durch Wärme bzw. Temperatureinfluss hervorgerufene bzw. induzierte Größenänderung bzw. -verringerung in der Fläche und somit in der Haupterstreckungsebene bzw. in mindestens einer Erstreckungsrichtung des textilen Flächengebildes verstanden, wobei dies durch eine Verkürzung bzw. Längenverringerung des erfindungsgemäß eingesetzten wärmeschrumpfbaren elastischen Kunststoffgarns hervorgerufen wird. In diesem Zusammenhang kann in Bezug auf das wärmeschrumpfbare elastische Kunststoffgarn im Rahmen des Wärmeschrumpfens grundsätzlich eine Verdickung, d. h. eine Erhöhung des Durchmessers vorliegen. Bei dem Wärmeschrumpfen handelt es sich im Rahmen der vorliegenden Erfindung somit um eine kontrollierte Größen- bzw. Längenverringerung des eingesetzten wärmeschrumpfbaren elastischen Kunststoffgarns und damit bzw. infolgedessen des textilen Flächengebildes an sich. Es handelt sich bei der erfindungsgemäß insbesondere im Rahmen der nachfolgenden Verarbeitung des erfindungsgemäßen textilen Flächengebildes vorliegenden Wärmeschrumpfung um einen zumindest im Wesentlichen irreversiblen Schrumpfungsvorgang. Diesbezüglich kann es aber grundsätzlich vorgesehen sein, dass das textile Flächengebilde nach erfolgter Wärmeschrumpfung definierte Rest(wärme)-schrumpfeigenschaften aufweist. Wie bereits angeführt, ist auch das wärmegeschrumpfte Flächengebilde mit elastischen Eigenschaften versehen.

Im Rahmen der vorliegenden Erfindung verhält es sich auch derart, dass durch den Einsatz eines wärmeschrumpfbaren elastischen Kunststoffgarns im Rahmen einer durchgeführten Wärmebehandlung ein in der Fläche bzw. Haupterstreckungsebene des textilen Flächengebildes nach der Erfindung hervorgerufener Wärmeschrumpf bei gleichzeitiger Aufrechterhaltung der Elastizität realisiert werden kann, welche mit einer Verringerung der flächenbezogenen Ausdehnung des Materials (Länge und/oder Tiefe bzw. Breite) einhergeht, was zu dem optimierten Aufspannverhalten auf eine vorgegebene Träger- bzw. Rahmenvorrichtung führt. Im Rahmen der vorliegenden Erfindung beziehen sich dabei die Begriffe "Länge" bzw. "Breite" auf die jeweiligen Erstreckungsrichtungen des textilen Flächengebildes in der Haupterstreckungsebene.

Weiterhin ist der Begriff "Schrumpftemperatur" bzw. "Wärmeschrumpftemperatur", wie er im Rahmen der vorliegenden Erfindung verwendet wird, derart zu verstehen, dass bei der entsprechenden Temperatur ein effektiver Wärmeschrumpf des dem textilen Flächengebilde nach der Erfindung zugrundeliegenden wärmeschrumpfbaren elastischen Kunststoffgarns und damit des textilen Flächengebildes insgesamt vorliegt.

Im Rahmen der vorliegenden Erfindung werden die Begriffe "Garn" einerseits und "Faden" andererseits insbesondere synonym verwendet, wobei die vorgenannten Begriffe im Allgemeinen einen Sammelbegriff für sämtliche linienförmig ausgebildeten textilen Gebilde darstellen. In diesem Zusammenhang kann ein Garn bzw. Faden ein oder mehrere Fasern bzw. Filamente aufweisen. Beispielsweise kann das Garn bzw. der Faden als Monofilament oder als Multifilament vorliegen, wie nachfolgend angeführt. Insbesondere handelt es sich bei dem erfindungsgemäß eingesetzten wärmeschrumpfbaren elastischen Kunststoffgarn bzw. -faden um ein Monofilamentgarn bzw. -faden.

Was den erfindungsgemäß verwendeten Begriff "elastisch" bzw. "Elastizität" (synonym auch als reversible Dehnfähigkeit bezeichnet) anbelangt, so bezieht sich dieser Begriff auf die Fähigkeit des diesbezüglichen Kunststoffgarns bzw. des textilen Flächengebildes, sich unter Einwirkung einer (Zug-)Kraft zu dehnen (was für das Kunststoffgarn einer Längenvergrößerung und für das Flächengebilde einer Längen- und/oder Breitenvergrößerung gleichkommt) und bei Entlastung bzw. Wegfall der (Zug-)Kraft zumindest im Wesentlichen vollständig oder aber zumindest teilweise wieder seine ursprüngliche Größe bzw. Länge bzw. Breite einzunehmen, was einer Größen- bzw. Längen- bzw. Breitenverringerung (auf die Ausgangsgröße bzw. -länge) gleichkommt.

Der Begriff "Gewebe", wie er erfindungsgemäß verwendet wird, bezieht sich insbesondere auf ein textiles Flächengebilde, welches auf Basis eines Garnsystems ausgebildet ist, welches entsprechende Schussfäden (synonym auch als Schüsse bzw. Schussgarne bezeichnet) sowie Kettfäden (synonym auch als Ketten bzw. Kettgarne bezeichnet) aufweist. Dabei verhält es sich insbesondere derart, dass sich die Schuss- und Kettfäden in der Sicht auf die Gewebefläche unter einem Winkel von etwa 90 Grad insbesondere mustermäßig kreuzen, wobei die Verbindung der Garne bzw. Fäden maßgeblich durch Reibschluss erfolgt. Grundsätzlich kann das Garnsystem mehrere Kett- bzw. Schussarten, wie Grund-, Pol- bzw. Füllketten einerseits sowie Grund-, Binde- und Füllschüsse andererseits, aufweisen.

Im Folgenden wird die vorliegende Erfindung anhand erfindungsgemäße Ausführungsbeispiele darstellenden Zeichnungen bzw. Figurendarstellung näher erläutert. Im Zusammenhang mit der Erläuterung dieser erfindungsgemäßen Ausführungsbeispiele, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:

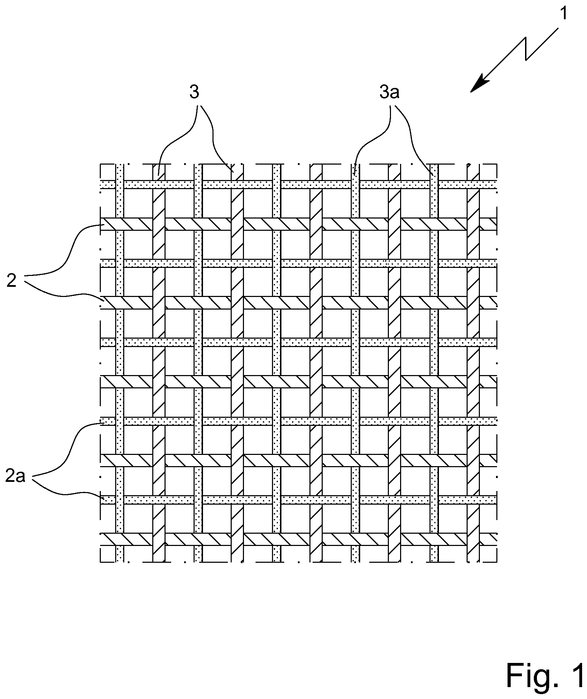

- Fig. 1: eine schematische Darstellung eines textilen Flächengebildes, welches in Form eines Gewebes ausgebildet ist, mit Wärmeschrumpfeigenschaften und elastischen Eigenschaften, wobei das textile Flächengebilde aus einem Garnsystem auf Basis einer Vielzahl an Schussfäden und einer Vielzahl an Kettfäden besteht, wobei jeder zweite Schussfaden und jeder zweite Kettfaden durch ein wärmeschrumpfbares elastisches Kunststoffgarn, welches auch nach erfolgter Wärmeschrumpfbehandlung seine elastischen Eigenschaften zumindest teilweise beibehält, gebildet ist so dass ein in Schussrichtung und ein Kettrichtung wärmeschrumpfbares textiles Flächengebilde mit elastischen Eigenschaften vorliegt;

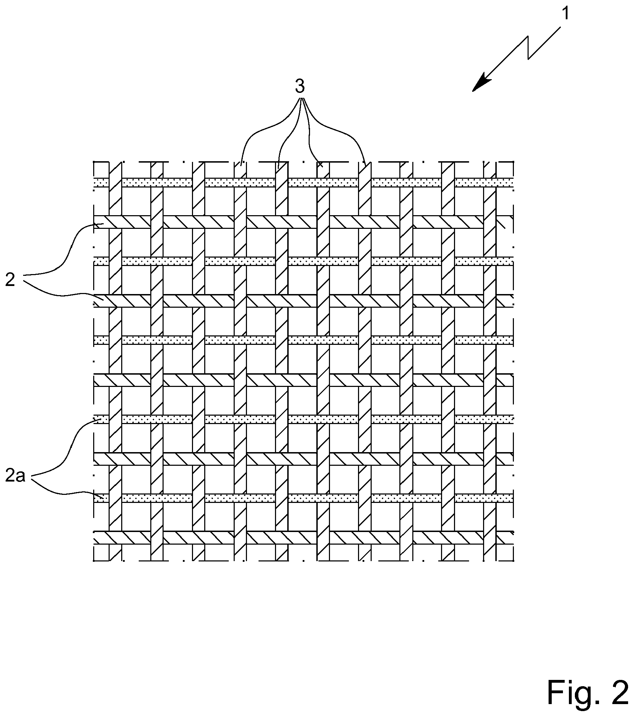

- Fig. 2: eine schematische Darstellung eines erfindungsgemäßen textilen Flächengebildes in Form eines Gewebes, mit Wärmeschrumpfeigenschaften und elastischen Eigenschaften gemäß einer weiteren erfindungsgemäßen Ausführungsform, wonach das textile Flächengebilde aus einem Garnsystem auf Basis einer Vielzahl an Schussfäden und einer Vielzahl an Kettfäden besteht, wobei jeder zweite Schussfaden durch das wärmeschrumpfbare elastische Kunststoffgarn, welches auch nach erfolgter Wärmeschrumpfbehandlung seine elastischen Eigenschaften zumindest teilweise beibehält, gebildet wird und wobei sämtliche Kettfäden nicht durch wärmeschrumpfbare elastische Kunststoffgarn gebildet werden, so dass ein in Schussrichtung wärmeschrumpfbares textiles Flächengebilde mit elastischen Eigenschaften vorliegt;

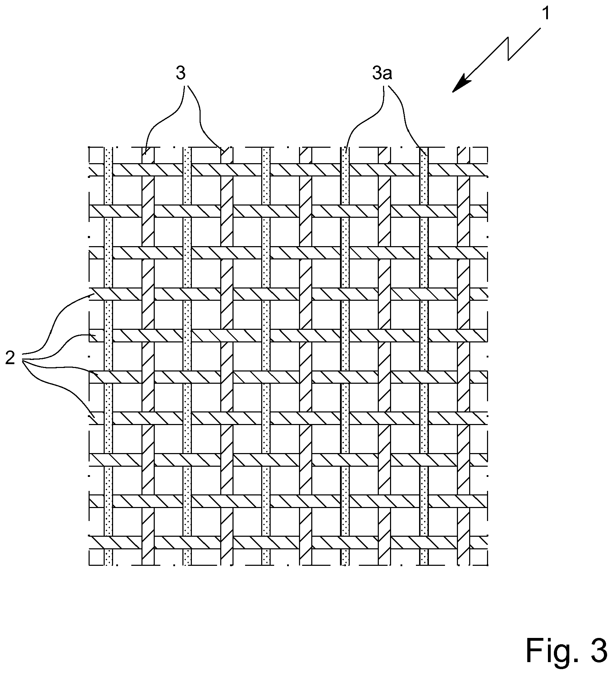

- Fig. 3: eine schematische Darstellung eines erfindungsgemäßen textilen Flächengebildes in Form eines Gewebes, mit Wärmeschrumpfeigenschaften und elastischen Eigenschaften, wobei das textile Flächengebilde aus einem Garnsystem auf Basis einer Vielzahl an Schussfäden und einer Vielzahl an Kettfäden besteht, wobei jeder zweite Kettfaden durch ein wärmeschrumpfbares elastisches Kunststoffgarn, welches auch nach erfolgter Wärmeschrumpfbehandlung seine elastischen Eigenschaften zumindest teilweise beibehält gebildet wird und wobei sämtliche Schussfäden nicht durch das in Rede stehende wärmeschrumpfbare elastische Kunststoffgarn gebildet sind, so dass ein elastisches textiles Flächengebilde vorliegt, welches in Kettrichtung wärmeschrumpfbar ausgebildet ist;

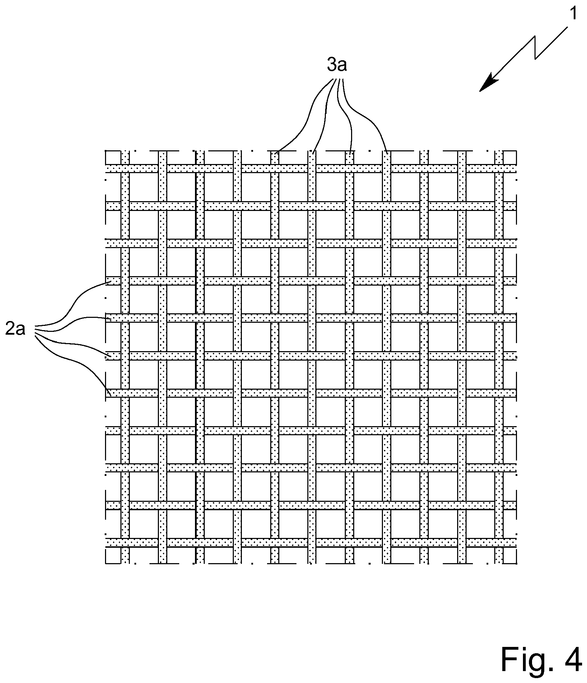

- Fig. 4: eine schematische Darstellung eines textilen Flächengebildes in Form eines Gewebes, mit Wärmeschrumpfeigenschaften und elastischen Eigenschaften, gemäß einer nochmals weiteren Ausführungsform der vorliegenden Erfindung, wobei das textile Flächengebildet aus einem Garnsystem auf Basis einer Vielzahl an Schussfäden und einer Vielzahl an Kettfäden besteht, wobei sämtliche Schussfäden sowie sämtliche Kettfäden durch ein wärmeschrumpfbares elastisches Kunststoffgarn, welches auch nach erfolgter Wärmeschrumpfbehandlung seine elastischen Eigenschaften zumindest teilweise beibehält, gebildet sind;

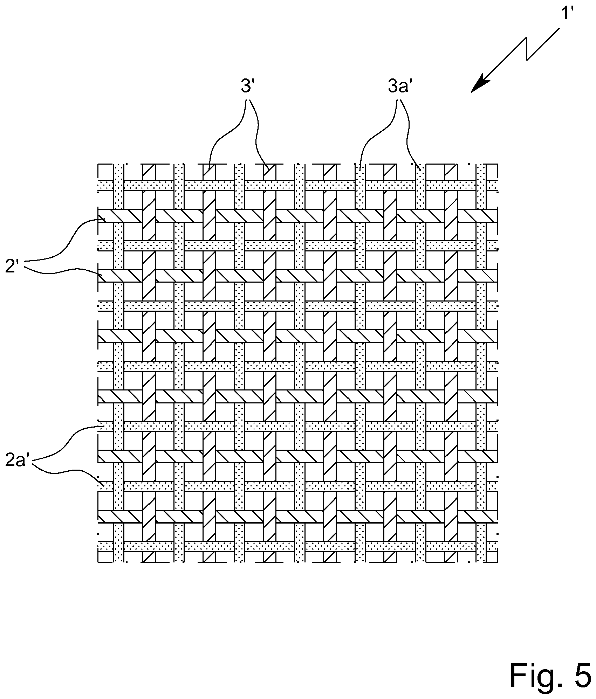

- Fig. 5: eine schematische Darstellung eines erfindungsgemäßen wärmegeschrumpften textilen Flächengebildes, wonach das wärmegeschrumpfte textile Flächengebilde in Form eines wärmegeschrumpften Gewebes vorliegt und wobei das wärmegeschrumpfte textile Flächengebilde ein Garnsystem auf Basis einer Vielzahl an Schussfäden und einer Vielzahl an Kettfäden aufweist, wobei jeder zweite Schussfaden sowie jeder zweite Kettfaden durch ein wärmegeschrumpftes elastisches Kunststoffgarn, welches auch nach erfolgter Wärmeschrumpfbehandlung seine elastischen Eigenschaften zumindest teilweise beibehalten hat, gebildet ist.

Fig. 1, 2, 3 und 4 zeigen somit das textile Flächengebilde (Flächenmaterial) 1 nach der Erfindung, insbesondere das textile Bespannungsmaterial, in Form eines Gewebes, bevorzugt für Möbel, wie Sitz- und/oder Liegemöbel, mit Wärmeschrumpfeigenschaften und elastischen Eigenschaften, insbesondere textiles Gewebe mit Wärmeschrumpfeigenschaften und elastischen Eigenschaften als Bespannungsmaterial für Möbel wie Sitz- und/oder Liegemöbel,
wobei das textile Flächengebilde 1 aus einem das textile Flächengebilde 1 ausbildenden Garnsystem 2, 2a, 3, 3a, insbesondere einem Garnverbund, mit einer Vielzahl an Schussfäden (Schüssen) 2, 2a und einer Vielzahl an Kettfäden (Ketten) 3, 3a besteht,
wobei das Garnsystem 2, 2a, 3, 3a mindestens ein wärmeschrumpfbares elastisches Kunststoffgarn, welches auch nach erfolgter Wärmeschrumpfbehandlung seine elastischen Eigenschaften zumindest teilweise beibehält, aufweist oder hieraus besteht.

Im Hinblick auf die nachfolgenden Ausführungen zu dem erfindungsgemäßen textile Flächengebilde (Flächenmaterial) 1 nach der Erfindung, mit Wärmeschrumpfeigenschaften und elastischen Eigenschaften, kann gleichermaßen auch auf Fig. 1, Fig. 2, Fig. 3 und Fig. 4 verwiesen werden.

Erfindungsgemäß wird somit ein wärmeschrumpfbares und elastisches textiles Flächengebilde bzw. Flächenmaterial in Form eines wärmeschrumpfbaren und elastischen Gewebes auf Basis eines Garnsystems bereitgestellt, wobei das Garnsystem eine Vielzahl an Schussfäden sowie eine Vielzahl an Kettfäden aufweist, wobei es insbesondere vorgesehen ist, dass die Schussfäden einerseits und die Kettfäden andererseits jeweils zumindest teilweise (d. h. bezogen auf die Gesamtzahl an Schussfäden bzw. Kettfäden des Garnsystems bzw. Gewebes) durch ein wärmeschrumpfbares elastisches Kunststoffgarn, welches auch nach erfolgter Wärmeschrumpfbehandlung seine elastischen Wärmeschrumpfeigenschaften zumindest teilweise beibehält, gebildet werden bzw. ein solches wärmeschrumpfbares und elastisches Kunststoffgarn aufweisen.

Auf dieser Basis wird erfindungsgemäß somit insgesamt ein spezielles textiles Flächengebilde mit definierten Wärmeschrumpfeigenschaften und definierten elastischen Eigenschaften bereitgestellt, wobei die elastischen Eigenschaften als solche auch nach erfolgter Wärmeschrumpfbehandlung vorliegen. Infolgedessen eignet sich das erfindungsgemäße textile Flächengebilde in hervorragender Weise zur Bespannung entsprechender Träger- bzw. Rahmenvorrichtungen, wobei auf dieser Basis dauerhaft faltenfreie und unter (Eigen-)Spannung stehende Bezüge bzw. Bespannungen bereitgestellt werden können, welche über hervorragende elastische Eigenschaften, einhergehend mit einer hohen Ergonomie und hervorragenden Dehnerholungseigenschaften, verfügen.

Erfindungsgemäß kann es insbesondere vorgesehen sein, dass das wärmeschrumpfbare elastische Kunststoffgarn, welches auch nach erfolgter Wärmeschrumpfbehandlung seine elastischen Eigenschaften zumindest teilweise beibehält, insbesondere in Form eines einzigen Garntyps (d. h. desselben Garntyps), insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, eingesetzt ist und/oder vorliegt. Diesbezüglich kann es erfindungsgemäß vorgesehen sein, dass im Falle verschiedener Kunststoffgarne des einzigen Garntyps die voneinander verschiedenen Kunststoffgarne in ihren jeweiligen Wärmeschrumpfeigenschaften und/oder in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Erfindungsgemäß kann es somit insbesondere vorgesehen sein, dass keine weiteren wärmeschrumpfbaren elastischen Kunststoffgarne eines anderen Garntyps, insbesondere in Form eines anderen Garntyps mit von dem erfindungsgemäß eingesetzten wärmeschrumpfbaren elastischen Kunststoffgarn verschiedenen Wärmeschrumpfeigenschaften und/oder verschiedenen Elastizitätseigenschaften, eingesetzt werden bzw. vorliegen. Infolge der Verwendung bzw. des Einsatzes des wärmeschrumpfbaren elastischen Kunststoffgarns in Form eines einzigen Garntyps, wie zuvor definiert, werden insgesamt in Bezug auf das erfindungsgemäße textile Flächengebilde einheitliche Wärmeschrumpfeigenschaften und Elastizitätseigenschaften bereitgestellt. Zudem wird der Material- und Kostenaufwand verringert.

Insbesondere kann es im Rahmen der vorliegenden Erfindung vorgesehen sein, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, das wärmeschrumpfbare elastische Kunststoffgarn, welches auch nach erfolgter Wärmeschrumpfbehandlung seine elastischen Eigenschaften zumindest teilweise beibehält, in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, aufweist oder hieraus besteht. Auch diesbezüglich kann es erfindungsgemäß vorgesehen sein, dass im Falle verschiedener Kunststoffgarne des einzigen Garntyps die voneinander verschiedenen Kunststoffgarne in ihren jeweiligen Wärmeschrumpfeigenschaften und/oder in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Erfindungsgemäß kann es für das erfindungsgemäße Flächengebilde 1 insgesamt vorgesehen sein, dass dieses das wärmeschrumpfbare elastische Kunststoffgarn, welches auch nach erfolgter Wärmeschrumpfbehandlung seine elastischen Eigenschaften zumindest teilweise beibehält, in Form eines einzigen Garntyps, insbesondere wie zuvor definiert, aufweist bzw. hieraus besteht. Folglich kann es für das erfindungsgemäße textile Flächengebilde insgesamt vorgesehen sein, dass dieses kein von dem erfindungsgemäß eingesetzten wärmeschrumpfbaren elastischen Kunststoffgarn verschiedenes wärmeschrumpfbares elastisches Kunststoffgarn bzw. kein wärmeschrumpfbares elastisches Kunststoffgarn mit einem von dem erfindungsgemäß eingesetzten wärmeschrumpfbaren elastischen Kunststoffgarn verschiedenen Garntyp, insbesondere wie zuvor definiert, aufweist. Wie zuvor angeführt, kann es erfindungsgemäß auch vorgesehen sein, dass im Falle verschiedener Kunststoffgarne des einzigen Garntyps (d. h. insbesondere Kunststoffgarne desselben Garntyps) die voneinander verschiedenen Kunststoffgarne sich in ihren jeweiligen Wärmeschrumpfeigenschaften und/oder in ihren jeweiligen Elastizitätseigenschaften, insbesondere in ihren jeweiligen Elastizitätseigenschaften, gemäß den obigen Ausführungen voneinander unterscheiden.

Erfindungsgemäß kann es somit insbesondere vorgesehen sein, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, außer und/oder neben dem wärmeschrumpfbaren elastischen Kunststoffgarn, welches auch nach erfolgter Wärmeschrumpfbehandlung seine elastischen Eigenschaften zumindest teilweise beibehält und welches in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, vorliegt, kein weiteres und/oder kein hiervon verschiedenes wärmeschrumpfbares elastisches Kunststoffgarn, insbesondere kein weiteres wärmeschrumpfbares elastisches Kunststoffgarn eines anderen und/oder verschiedenen Garntyps, vorzugsweise kein weiteres wärmeschrumpfbares elastisches Kunststoffgarn eines anderen und/oder verschiedenen Garntyps mit anderen und/oder verschiedenen Wärmeschrumpfeigenschaften und/oder mit anderen und/oder verschiedenen Elastizitätseigenschaften, aufweist.

Entsprechendes kann gleichermaßen für das erfindungsgemäße textile Flächenmaterial 1 als solches gelten. Erfindungsgemäß kann es somit gleichermaßen vorgesehen sein, dass das textile Flächengebilde 1 außer bzw. neben dem wärmeschrumpfbaren elastischen Kunststoffgarn, welches auch nach erfolgter Wärmeschrumpfbehandlung seine elastischen Eigenschaften zumindest teilweise beibehält und welches in Form eines einzigen Garntyps, insbesondere in Form eines einzigen Garntyps mit zumindest im Wesentlichen identischen bzw. einheitlichen Wärmeschrumpfeigenschaften bzw. mit zumindest im Wesentlichen identischen bzw. einheitlichen Elastizitätseigenschaften vorliegt, kein weiteres bzw. kein hiervon verschiedenes wärmeschrumpfbares elastisches Kunststoffgarn, insbesondere kein weiteres wärmeschrumpfbares elastisches Kunststoffgarn eines anderen bzw. verschiedenen Garntyps, vorzugsweise kein weiteres wärmeschrumpfbares elastisches Kunststoffgarn eines anderen bzw. verschiedenen Garntyps mit anderen bzw. verschiedenen Wärmeschrumpfeigenschaften bzw. mit anderen bzw. verschiedenen Elastizitätseigenschaften, aufweist. Diesbezüglich kann es auch vorgesehen sein, dass im Falle verschiedener Kunststoffgarne des einzigen Garntyps (d. h. insbesondere Kunststoffgarne desselben Garntyps) die voneinander verschiedenen Kunststoffgarne sich in ihren jeweiligen Wärmeschrumpfeigenschaften und/oder in ihren jeweiligen Elastizitätseigenschaften, insbesondere in ihren jeweiligen Elastizitätseigenschaften, gemäß den obigen Ausführungen voneinander unterscheiden.

Insbesondere kann es erfindungsgemäß vorgesehen sein, dass das wärmeschrumpfbare elastische Kunststoffgarn, welches auch nach erfolgter Wärmeschrumpfbehandlung seine elastischen Eigenschaften zumindest teilweise beibehält, in Form eines einzigen Garntyps, insbesondere in Form eines einzigen Garntyps mit zumindest im Wesentlichen identischen und/oder einheitlichen Elastizitätseigenschaften eingesetzt ist und/oder vorliegt. Erfindungsgemäß kann es dabei vorgesehen sein, dass im Falle verschiedener Kunststoffgarne des einzigen Garntyps die voneinander verschiedenen Kunststoffgarne in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert. und/oder
Zudem kann es erfindungsgemäß vorgesehen sein, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, das wärmeschrumpfbare elastische Kunststoffgarn, welches auch nach erfolgter Wärmeschrumpfbehandlung seine elastischen Eigenschaften zumindest teilweise beibehält, in Form eines einzigen Garntyps, insbesondere in Form eines einzigen Garntyps mit zumindest im Wesentlichen identischen und/oder einheitlichen Elastizitätseigenschaften aufweist oder hieraus besteht. Erfindungsgemäß können zudem im Falle verschiedener Kunststoffgarne des einzigen Garntyps die voneinander verschiedenen Kunststoffgarne in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Weiterhin kann es erfindungsgemäß vorgesehen sein, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, außer und/oder neben dem wärmeschrumpfbaren elastischen Kunststoffgarn, welches auch nach erfolgter Wärmeschrumpfbehandlung seine elastischen Eigenschaften zumindest teilweise beibehält und welches in Form eines einzigen Garntyps, insbesondere in Form eines einzigen Garntyps mit zumindest im Wesentlichen identischen und/oder einheitlichen Elastizitätseigenschaften, kein weiteres und/oder kein hiervon verschiedenes wärmeschrumpfbares elastisches Kunststoffgarn, insbesondere kein weiteres wärmeschrumpfbares elastisches Kunststoffgarn eines anderen und/oder verschiedenen Garntyps, vorzugsweise kein weiteres wärmeschrumpfbares elastisches Kunststoffgarn eines anderen und/oder verschiedenen Garntyps mit anderen und/oder verschiedenen Elastizitätseigenschaften, aufweist.

Erfindungsgemäß kann es mit anderen Worten insbesondere auch vorgesehen sein, dass für den Fall, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, mehrere und/oder verschiedene wärmeschrumpfbare elastische Kunststoffgarne, welche auch nach erfolgter Wärmeschrumpfbehandlung ihre elastischen Eigenschaften zumindest teilweise beibehalten, aufweist oder hieraus besteht, sämtliche dieser wärmeschrumpfbaren elastischen Kunststoffgarne, welche auch nach erfolgter Wärmeschrumpfbehandlung ihre elastischen Eigenschaften zumindest teilweise beibehalten, vom selben Garntyp sind und/oder in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, vorliegen. Erfindungsgemäß kann es grundsätzlich vorgesehen sein, dass im Falle verschiedener Kunststoffgarne desselben und/oder des einzigen Garntyps die voneinander verschiedenen Kunststoffgarne in ihren jeweiligen Wärmeschrumpfeigenschaften und/oder ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert. Dementsprechend kann es sich erfindungsgemäß derart verhalten, dass das Garnsystem 2, 2a, 3, 3a bzw. das erfindungsgemäße textile Flächengebilde 1 als solches insbesondere gemäß den obigen Maßgaben neben dem Garntyp des eingesetzten wärmeschrumpfbaren elastischen Kunststoffgarns keinen weiteren bzw. hiervon verschiedenen Garntyp des wärmeschrumpfbaren elastischen Kunststoffgarns aufweist.

Im Rahmen der vorliegenden Erfindung kann es zudem vorgesehen sein, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, kein wärmschrumpfbares unelastisches Kunststoffgarn aufweist bzw. frei von wärmeschrumpfbaren unelastischen Kunststoffgarnen ist. Dementsprechend kann es erfindungsgemäß insbesondere vorgesehen sein, dass die Wärmeschrumpfeigenschaften zumindest im Wesentlichen ausschließlich von dem erfindungsgemäß eingesetzten wärmeschrumpfbaren elastischen Kunststoffgarn, welches auch nach erfolgter Wärmeschrumpfbehandlung seine elastischen Eigenschaften zumindest teilweise beibehält, bereitgestellt werden. Auch in diesem Zusammenhang ist ein zentraler Vorteil der vorliegenden Erfindung darin zu sehen, dass Wärmeschrumpfeigenschaften einerseits und Elastizitätseigenschaften sozusagen von ein und demselben Kunststoffgarn bzw. Garntyp bereitgestellt werden, was insbesondere auch mit der Bereitstellung definierter Wärmeschrumpf- bzw. Elastizitätseigenschaften bei gleichzeitig verringertem Materialaufwand einhergeht. Der Begriff "unelastisch" bezieht sich dabei insbesondere auf solche Garne, welche keine bzw. allenfalls eine geringe Elastizität aufweisen, insbesondere wobei die maximale Elastizität höchstens 10 %, vorzugsweise höchstens 5 %, bevorzugt höchstens 2 %, der Elastizität des erfindungsgemäß eingesetzten wärmeschrumpfbaren und elastischen Kunststoffgarns beträgt. In diesem Zusammenhang kann es erfindungsgemäß insbesondere auch vorgesehen sein, dass das textile Flächengebilde 1 nach der Erfindung als solches kein wärmeschrumpfbares unelastisches Kunststoffgarn aufweist bzw. frei von wärmeschrumpfbaren und unelastischen Kunststoffgarnen ist.

Erfindungsgemäß ist es vorgesehen, dass das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, kein nichtwärmeschrumpfbares elastisches Kunststoffgarn aufweist bzw. frei von nichtwärmeschrumpfbaren elastischen Kunststoffgarnen ist. Beispielsweise kann es erfindungsgemäß vorgesehen sein, dass das Garnsystem 2, 2a, 3, 3a keine nichtwärmeschrumpfbaren Gummigarne oder dergleichen aufweist. Auch hierdurch wird gewährleistet, dass die Wärmeschrumpf- und Elastizitätseigenschaften von ein und demselben Kunststoffgarn bzw. Garntyp bereitgestellt werden. Der Begriff " nichtwärmeschrumpfbar" bezieht sich dabei insbesondere auf solche Garne, welche keine bzw. allenfalls eine geringe Wärmeschrumpfbarkeit aufweisen, insbesondere wobei die maximale Wärmeschrumpfbarkeit höchstens 10 %, vorzugsweise höchstens 5 %, bevorzugt höchstens 2 %, der Wärmeschrumpfbarkeit des erfindungsgemäß eingesetzten wärmeschrumpfbaren und elastischen Kunststoffgarns beträgt. In entsprechender Weise kann es für das textile Flächengebilde 1 nach der Erfindung als solches vorgesehen sein, dass dieses kein nichtwärmeschrumpfbares elastisches Kunststoffgarn aufweist bzw. frei von nichtwärmeschrumpfbaren elastischen Kunststoffgarnen ist.

Erfindungsgemäß ist es insbesondere vorgesehen, wie in Fig. 1, Fig. 2, Fig. 3 bzw. Fig. 4 dargestellt, dass die Schussfäden 2, 2a und/oder die Kettfäden 3, 3a, insbesondere die Schussfäden 2, 2a und die Kettfäden 3, 3a, zumindest teilweise von dem wärmeschrumpfbaren elastischen Kunststoffgarn, welches auch nach erfolgter Wärmeschrumpfbehandlung seine elastischen Eigenschaften zumindest teilweise beibehält, gebildet sind (nämlich die Schussfäden 2a bzw. die Kettfäden 3a), insbesondere wobei die von dem wärmeschrumpfbaren elastischen Kunststoffgarn, welches auch nach erfolgter Wärmeschrumpfbehandlung seine elastischen Eigenschaften zumindest teilweise beibehält, gebildeten Schussfäden 2a als Wärmeschrumpfschussfäden vorliegen bzw. ausgebildet sind und/oder insbesondere wobei die von dem wärmeschrumpfbaren elastischen Kunststoffgarn, welches auch nach erfolgter Wärmeschrumpfbehandlung seine elastischen Eigenschaften zumindest teilweise beibehält, gebildeten Kettfäden 3a als Wärmeschrumpfkettfäden ausgebildet sind.

Mit anderen Worten kann es sich erfindungsgemäß insbesondere derart verhalten, dass zumindest ein Teil der Gesamtheit bzw. der Gesamtanzahl an Schussfäden und/oder Kettfäden von dem wärmeschrumpfbaren elastischen Kunststoffgarn, welches auch nach erfolgter Wärmeschrumpfbehandlung seine elastischen Eigenschaften zumindest teilweise beibehält, gebildet sind, insbesondere wobei die von dem wärmeschrumpfbaren elastischen Kunststoffgarn, welches auch nach erfolgter Wärmeschrumpfbehandlung seine elastischen Eigenschaften zumindest teilweise beibehält, gebildeten Schussfäden 2a als Wärmeschrumpfschussfäden und in entsprechender Weise die von dem in Rede stehenden wärmeschrumpfbaren elastischen Kunststoffgarn gebildeten Kettfäden 3a als Wärmeschrumpfkettfäden ausgebildet sind bzw. vorliegen.

Erfindungsgemäß verhält es sich somit insbesondere derart, dass das wärmeschrumpfbare elastische Kunststoffgarn, welches auch nach erfolgter Wärmeschrumpfbehandlung seine elastischen Eigenschaften zumindest teilweise beibehält, in Form von Schussfäden 2a, insbesondere Wärmeschrumpfschussfäden, und/oder als in Form von Kettfäden 3a, insbesondere Wärmeschrumpfkettfäden, in dem Garnsystem 2, 2a, 3, 3a bzw. dem textilen Flächengebilde 1 vorliegen bzw. dass das wärmeschrumpfbare elastische Kunststoffgarn, welches auch nach erfolgter Wärmeschrumpfbehandlung seine elastischen Eigenschaften zumindest teilweise beibehält, Bestandteil von Schussfäden 2a, insbesondere Wärmeschrumpfschussfäden, und/oder von Kettfäden 3a, insbesondere Wärmeschrumpfkettfäden, ist bzw. die Schussfäden 2a, insbesondere Wärmeschrumpfschussfäden, und/oder die Kettfäden 3a, insbesondere Wärmeschrumpfkettfäden, aus dem wärmeschrumpfbaren elastischen Kunststoffgarn, welches auch nach erfolgter Wärmeschrumpfbehandlung seine elastischen Eigenschaften zumindest teilweise beibehält, gebildet sind.

Erfindungsgemäß kann es insbesondere vorgesehen sein, dass die Schussfäden 2a und/oder die Kettfäden 3a, insbesondere die Schussfäden 2a und die Kettfäden 3a, vollständig bzw. in ihrer Gesamtanzahl von dem wärmeschrumpfbaren elastischen Kunststoffgarn, welches auch nach erfolgter Wärmeschrumpfbehandlung seine elastischen Eigenschaften zumindest teilweise beibehält, gebildet sind.

Erfindungsgemäß ist es in diesem Zusammenhang somit insbesondere vorgesehen, dass das wärmeschrumpfbare elastische Kunststoffgarn, welches auch nach erfolgter Wärmeschrumpfbehandlung seine elastischen Eigenschaften zumindest teilweise beibehält, in Form der Schussfäden 2a, insbesondere Wärmeschrumpfschussfäden, und/oder in Form der Kettfäden 3a, insbesondere Wärmeschrumpfkettfäden, vorliegt, wie gleichermaßen in Fig.1, Fig. 2, Fig. 3 und Fig. 4 aufgezeigt.

Insbesondere kann es erfindungsgemäß vorgesehen sein, dass, wie beispielhaft in Fig. 1, Fig. 2 und Fig. 4 dargestellt, die von dem wärmeschrumpfbaren elastischen Kunststoffgarn, welches auch nach erfolgter Wärmeschrumpfbehandlung seine elastischen Eigenschaften zumindest teilweise beibehält, gebildeten Schussfäden 2a in Form von Wärmeschrumpfschussfäden (Wärmeschrumpfschüssen) ausgebildet sind bzw. als solche vorliegen.

Gleichermaßen kann es erfindungsgemäß vorgesehen sein, dass die von dem wärmeschrumpfbaren elastischen Kunststoffgarn, welches auch nach erfolgter Wärmeschrumpfbehandlung seine elastischen Eigenschaften zumindest teilweise beibehält, gebildeten Kettfäden 3a in Form von Wärmeschrumpfkettfäden (Wärmeschrumpfketten) ausgebildet sind oder als solche vorliegen, wie gleichermaßen in Fig. 1, Fig. 3 und Fig. 4 veranschaulicht.

Auch vor dem Hintergrund der obigen Ausführungen ist es erfindungsgemäß vorgesehen, dass das textile Flächengebilde 1 in Schuss- und Kettrichtung elastisch ausgebildet ist, vorzugsweise in beide Erstreckungsrichtungen des in Rede stehenden textilen Flächengebildes 1. In diesem Zusammenhang kann es beispielsweise vorgesehen sein, dass nur Schussfäden oder aber nur Kettfäden auf Basis bzw. in Form des wärmeschrumpfbaren elastischen Kunststoffgarns ausgebildet sind (Schrumpffähigkeit jeweils in eine Erstreckungsrichtung) oder aber dass sowohl Schussfäden als auch Kettfäden auf Basis bzw. in Form des wärmeschrumpfbaren elastischen Kunststoffgarns ausgebildet sind (Schrumpffähigkeit in beide Erstreckungsrichtungen). Auf diese Weise können die Wärmeschrumpfeigenschaften bzw. Elastizitätseigenschaften individuell in Bezug auf die jeweilige Erstreckungsrichtung ausgebildet bzw. maßgeschneidert werden.

Darüber hinaus kann es im Rahmen der vorliegenden Erfindung vorgesehen sein, dass jeder bis jeder zwölfte, insbesondere jeder bis jeder zehnte, vorzugsweise jeder bis jeder achte, bevorzugt jeder zweite bis jeder sechste, besonders bevorzugt jeder zweite bis jeder vierte Schussfaden 2, 2a von dem wärmeschrumpfbaren elastischen Kunststoffgarn, welches auch nach erfolgter Wärmeschrumpfbehandlung seine elastischen Eigenschaften zumindest teilweise beibehält, gebildet ist (welcher dann jeweils als wärmeschrumpfender Schussfaden 2a bzw. Wärmeschrumpfschussfaden 2a vorliegt) und/oder als von dem wärmeschrumpfbaren elastischen Kunststoffgarn, welches auch nach erfolgter Wärmeschrumpfbehandlung seine elastischen Eigenschaften zumindest teilweise beibehält, ausgebildeter Wärmeschrumpfschussfaden 2a vorliegt. Hierzu kann beispielsweise auf Fig. 1 und Fig. 2 verwiesen werden, welche jeweils veranschaulichend aufzeigen, dass erfindungsgemäß jeder zweite Schussfaden 2, 2a als wärmeschrumpfender Schussfaden 2a bzw. Wärmeschrumpfschussfaden 2a ausgebildet sein kann.

Darüber hinaus kann es erfindungsgemäß auch vorgesehen sein, dass jeder zweite bis jeder zwölfte, insbesondere jeder bis jeder zehnte, vorzugsweise jeder bis jeder achte, bevorzugt jeder zweite bis jeder sechste, besonders bevorzugt jeder zweite bis jeder vierte Kettfaden 3, 3a von dem wärmeschrumpfbaren elastischen Kunststoffgarn, welches auch nach erfolgter Wärmeschrumpfbehandlung seine elastischen Eigenschaften zumindest teilweise beibehält, gebildet ist (welcher dann jeweils als wärmeschrumpfender Kettfaden 3a bzw. Wärmeschrumpfschussfaden 3a vorliegt) bzw. als von dem wärmeschrumpfbaren elastischen Kunststoffgarn, welches auch nach erfolgter Wärmeschrumpfbehandlung seine elastischen Eigenschaften zumindest teilweise beibehält, ausgebildeter Wärmeschrumpfkettfaden 3a vorliegt. Diesbezüglich veranschaulichen Fig. 1 und Fig. 3 eine erfindungsgemäße Ausführungsform, wonach jeder zweite Kettfaden 3, 3a als wärmeschrumpfender Kettfaden 3a bzw. Wärmeschrumpfkettfaden 3a ausgebildet ist.

In diesem Zusammenhang versteht es sich zudem, dass die Schussrichtung und Kettrichtung des textilen Flächengebildes 1 zueinander gleiche oder aber voneinander verschiedene Abfolgen bzw. eine zueinander gleiche oder aber voneinander verschiedene Anzahl an Wärmeschrumpfschussfäden 2a bzw. Wärmeschrumpfkettfäden 3a aufweisen können. Dabei kann die diesbezügliche Abfolge bzw. Anzahl auch innerhalb einer Erstreckungsrichtung sozusagen abschnittsweise variieren bzw. unterschiedlich sein. Hierdurch können die Wärmeschrumpfeigenschaften in dem textilen Flächengebilde 1 abschnittsweise bzw. individuell ausgebildet werden.

Im Allgemeinen kann es im Rahmen der vorliegenden Erfindung vorgesehen sein, dass das wärmeschrumpfbare elastische Kunststoffgarn, welches auch nach erfolgter Wärmeschrumpfbehandlung seine elastischen Eigenschaften zumindest teilweise beibehält, in Form mindestens eines Grundfadens (Wärmeschrumpfgrundfaden), insbesondere in Form mindestens eines Grundschussfadens (Wärmeschrumpfgrundschussfaden) und/oder mindestens eines Grundkettfadens (Wärmeschrumpfgrundkettfaden) eingearbeitet ist bzw. vorliegt.

Zudem kann es erfindungsgemäß grundsätzlich auch vorgesehen sein, dass das wärmeschrumpfbare elastische Kunststoffgarn, welches auch nach erfolgter Wärmeschrumpfbehandlung seine elastischen Eigenschaften zumindest teilweise beibehält, in Form mindestens eines Füllfadens (Wärmeschrumpffüllfaden), insbesondere in Form mindestens eines Füllschussfadens (Wärmeschrumpffüllschussfaden) und/oder mindestens eines Füllkettfadens (Wärmeschrumpffüllkettfaden) eingearbeitet ist bzw. vorliegt.

Schließlich kann es erfindungsgemäß grundsätzlich auch vorgesehen sein, dass das wärmeschrumpfbare elastische Kunststoffgarn, welches auch nach erfolgter Wärmeschrumpfbehandlung seine elastischen Eigenschaften zumindest teilweise beibehält, in Form mindestens eines Polfadens (Wärmeschrumpfpolfaden), insbesondere in Form mindestens eines Polschussfadens (Wärmeschrumpfpolschussfaden) und/oder mindestens eines Polkettfadens (Wärmeschrumpfpolkettfaden) eingearbeitet ist und/oder vorliegt.

Im Hinblick auf die obigen Ausbildungen können auch entsprechende Kombinationen in Betracht kommen.

Im Allgemeinen kann die Menge bzw. der Gehalt an wärmeschrumpfbarem elastischem Kunststoffgarn in dem textilen Flächengebilde 1 nach der Erfindung in großen Bereichen variieren. Insbesondere kann es erfindungsgemäß vorgesehen sein, dass das Flächengebilde 1 das wärmeschrumpfbare elastische Kunststoffgarn, welches auch nach erfolgter Wärmeschrumpfbehandlung seine elastischen Eigenschaften zumindest teilweise beibehält, in einer Menge im Bereich von 1 Gew.-% bis 100 Gew.-%, insbesondere im Bereich im Bereich von 3 Gew.-% bis 95 Gew.-%, vorzugsweise im Bereich von 5 Gew.-% bis 80 Gew.-%, bevorzugt im Bereich von 8 Gew.-% bis 50 Gew.-%, besonders bevorzugt im Bereich von 10 Gew.-% bis 40 Gew.-%, ganz besonders bevorzugt im Bereich von 15 Gew.-% bis 30 Gew.-%, bezogen auf das Flächengebilde 1, enthält. Auch hierdurch können die Wärmeschrumpfeigenschaften und Elastizitätseigenschaften weiterführend spezifiziert bzw. individuell eingestellt werden.

Zudem kann es auch vorgesehen sein, dass das Garnsystem 2, 2a, 3, 3a das wärmeschrumpfbare elastische Kunststoffgarn, welches auch nach erfolgter Wärmeschrumpfbehandlung seine elastischen Eigenschaften zumindest teilweise beibehält, in einer Menge im Bereich von 1 Gew.-% bis 100 Gew.-%, insbesondere im Bereich im Bereich von 3 Gew.-% bis 95 Gew.-%, vorzugsweise im Bereich von 5 Gew.-% bis 80 Gew.-%, bevorzugt im Bereich von 8 Gew.-% bis 50 Gew.-%, besonders bevorzugt im Bereich von 10 Gew.-% bis 40 Gew.-%, ganz besonders bevorzugt im Bereich von 15 Gew.-% bis 30 Gew.-%, bezogen auf das Garnsystem 2, 2a, 3, 3a, enthält.

Insbesondere kann das insbesondere als Schussfaden 2a, insbesondere Wärmeschrumpfschussfaden, und/oder als Kettfaden 3a, insbesondere Wärmeschrumpfkettfaden, ausgebildete bzw. vorliegende wärmeschrumpfbare elastische Kunststoffgarn, welches auch nach erfolgter Wärmeschrumpfbehandlung seine elastischen Eigenschaften zumindest teilweise beibehält, zum jeweils benachbarten Garn um das 0,15fache bis 5fache, insbesondere um das 0,25fache bis 3fache, vorzugsweise um das 0,5fache bis 2fache, bevorzugt um das 0,6fache bis 1,5fache, besonders bevorzugt um das 0,75fache bis 1fache, des mittleren Garndurchmessers des wärmeschrumpfbaren elastischen Kunststoffgarn, welches auch nach erfolgter Wärmeschrumpfbehandlung seine elastischen Eigenschaften zumindest teilweise beibehält, bezogen auf den nichtgeschrumpften Zustand, beabstandet sein.

Im Allgemeinen kann es erfindungsgemäß vorgesehen sein, dass das wärmeschrumpfbare elastische Kunststoffgarn, welches auch nach erfolgter Wärmeschrumpfbehandlung seine elastischen Eigenschaften zumindest teilweise beibehält, als Monofilament oder als Multifilament, bevorzugt als Monofilament, ausgebildet ist.

Erfindungsgemäß ist es grundsätzlich auch möglich, dass das wärmeschrumpfbare elastische Kunststoffgarn, welches auch nach erfolgter Wärmeschrumpfbehandlung seine elastischen Eigenschaften zumindest teilweise beibehält, als Stapelfasergarn (*Core*-Garn) ausgebildet ist. Gleichermaßen ist es grundsätzlich auch möglich, dass das wärmeschrumpfbare elastische Kunststoffgarn in Kombination mit weiteren Garnen bzw. Fäden eingesetzt ist, beispielsweise in haftend Verzwirnung oder dergleichen, wobei diesbezüglich grundsätzlich auch nichtwärmeschrumpfbare und/oder unelastische Garne bzw. Fäden zum Einsatz kommen können.

Besonders gute Ergebnisse hinsichtlich des Wärmeschrumpfverhaltens und der Elastizität ergeben sich erfindungsgemäß insbesondere für den Fall, wonach das wärmeschrumpfbare elastische Kunststoffgarn, welches auch nach erfolgter Wärmeschrumpfbehandlung seine elastischen Eigenschaften zumindest teilweise beibehält, auf Basis mindestens eines wärmeschrumpfbaren elastomeren bzw. thermoplastischen Polymers und/oder auf Basis mindestens eines thermoplastischen Elastomers (TPE) ausgebildet ist oder hieraus besteht.

Erfindungsgemäß ist es vorgesehen, dass das wärmeschrumpfbare elastische Kunststoffgarn, welches auch nach erfolgter Wärmeschrumpfbehandlung seine elastischen Eigenschaften zumindest teilweise beibehält, auf Basis eines wärmeschrumpfbaren elastomeren und/oder thermoplastischen Polyesters ausgebildet ist oder hieraus besteht.

Im Allgemeinen kann das wärmeschrumpfbare elastische Kunststoffgarn, welches auch nach erfolgter Wärmeschrumpfbehandlung seine elastischen Eigenschaften zumindest teilweise beibehält, vor der Wärmeschrumpfbehandlung eine Restdehnung von weniger als 30 %, vorzugsweise von weniger als 20 %, bevorzugt von weniger als 10 %, ganz besonders bevorzugt von weniger als 5 % aufweisen.

Zudem kann das wärmeschrumpfbare elastische Kunststoffgarn, welches auch nach erfolgter Wärmeschrumpfbehandlung seine elastischen Eigenschaften zumindest teilweise beibehält, nach der Wärmeschrumpfbehandlung eine Restdehnung von weniger als 35 %, vorzugsweise von weniger als 25 %, bevorzugt von weniger als 15 %, ganz besonders bevorzugt von weniger als 10 % aufweisen.

Dabei kann es vorgesehen sein, dass die Restdehnung des Kunststoffgarns nach der erfolgten Wärmeschrumpfbehandlung die Restdehnung des Kunststoffgarns vor der erfolgten Wärmeschrumpfbehandlung um weniger als 50 %, insbesondere um weniger als 40 %, vorzugsweise um weniger als 30 %, bevorzugt um weniger als 20 %, besonders bevorzugt um weniger als 10 %, ganz besonders bevorzugt um weniger als 5 %, übersteigt.

Im Allgemeinen kann die Elastizität bzw. die Restdehnung nach der DIN 53 835-2 bestimmt werden, insbesondere indem die Zugbeanspruchung mehrmals bzw. mehrzyklisch, insbesondere in Rahmen von fünf Zyklen, durchgeführt wird. Die Restdehnung kann aber auch nach DIN 53 835-3 bestimmt werden, indem die Zugbeanspruchung einmalig bzw. einzyklisch durchgeführt wird. Die Zugbeanspruchung gemäß DIN 53 835-2 bzw. DIN 53 835-3 wird wie folgt durchgeführt:
Das Kunststoffgarn wird insbesondere in ein Prüfgerät zur Durchführung von Zugversuchen eingespannt (z. B. Fa. Zwick, Typ BZ 1.0/TH1S). Es wird eine freie Einspannlänge als Ausgangslänge festgelegt, beispielsweise 100 mm. Anschließend wird der eingespannte Kunststoffgarn so lange einer Zugbeanspruchung, beispielsweise bei einer Prüfgeschwindigkeit von 50 mm/min ausgesetzt, bis eine vorbestimmte Gesamtlänge des Kunststoffgarns (beispielsweise ausgehend von 100 mm auf eine Gesamtlänge von 125 mm) erreicht ist. Dadurch lässt sich die Gesamtlängenänderung (Differenz aus der Gesamtlänge und der Ausgangslänge bzw. der freien Einspannlänge) sowie die Gesamtdehnung (Quotient aus Gesamtlängenänderung und Ausgangslänge) ermitteln. Im Anschluss hieran wird die Zugkrafteinwirkung auf das Kunststoffgarn aufgelöst und die Restlängenänderung (Differenz aus der Länge des Kunststoffgarns nach der Zugbeanspruchung und der Ausgangslänge des Kunststoffgarns vor der Zugbeanspruchung) bestimmt. Dadurch lässt sich schließlich die Restdehnung (Quotient aus der Restlängenänderung nach der Zugbeanspruchung und der Ausgangslänge bzw. freien Einspannlänge vor der Zugbelastung) ermitteln.

Erfindungsgemäß können beispielsweise die von der Firma Colorific Monofil GmbH hergestellten bzw. vertriebenen wärmeschrumpfbaren elastischen Kunststoffgarne welche insbesondere in Form von Monofilamenten vorliegen, eingesetzt werden, beispielsweise vom Typ Q373, Q372 sowie Q371.

Erfindungsgemäß kann das wärmeschrumpfbare elastische Kunststoffgarn, welches auch nach erfolgter Wärmeschrumpfbehandlung seine elastischen Eigenschaften zumindest teilweise beibehält, einen Durchmesser im Bereich von 0,05 mm bis 1,5 mm, insbesondere im Bereich von 0,075 mm bis 1,2 mm, vorzugsweise im Bereich von 0,1 mm bis 1 mm, bevorzugt im Bereich von 0,1 mm bis 0,8 mm, besonders bevorzugt im Bereich von 0,15 mm bis 0,7 mm, aufweisen.

Gleichermaßen kann das wärmeschrumpfbare elastische Kunststoffgarn, welches auch nach erfolgter Wärmeschrumpfbehandlung seine elastischen Eigenschaften zumindest teilweise beibehält, einen Titer im Bereich von 50 dtex bis 8.000 dtex, insbesondere im Bereich von 100 dtex bis 6.000 dtex, vorzugsweise im Bereich von 200 dtex bis 5.000 dtex, bevorzugt im Bereich von 250 dtex bis 4.500 dtex, besonders bevorzugt im Bereich von 300 dtex bis 4.000 dtex, aufweisen.

Insbesondere kann das wärmeschrumpfbare elastische Kunststoffgarn, welches auch nach erfolgter Wärmeschrumpfbehandlung seine elastischen Eigenschaften zumindest teilweise beibehält, einen Titer im Bereich von 25 den bis 7.500 den, insbesondere im Bereich von 50 den bis 5.000 den, vorzugsweise im Bereich von 100 den bis 4.500 den, bevorzugt im Bereich von 150 den bis 4.000 den, besonders bevorzugt im Bereich von 200 den bis 3.500 den, aufweisen.

Im Allgemeinen kann der Durchmesser mit dem Fachmann an sich bekannten Verfahren bestimmt werden, beispielsweise auf Basis optischer bzw. lichtmikroskopischer Verfahren. Zudem kann der Titer insbesondere auf Basis der DIN EN ISO 2060:1995-04 bestimmt werden.

Das wärmeschrumpfbare elastische Kunststoffgarn, welches auch nach erfolgter Wärmeschrumpfbehandlung seine elastischen Eigenschaften zumindest teilweise beibehält, kann zudem eine Reißfestigkeit im Bereich von 1 N bis 500 N, insbesondere im Bereich von 2 N bis 400 N, vorzugsweise im Bereich von 3 N bis 300 N, bevorzugt im Bereich von 4 N bis 250 N, besonders bevorzugt im Bereich von 5 N bis 200 N, ganz besonders bevorzugt im Bereich von 10 N bis 150 N, aufweisen. Dabei kann die Reißfestigkeit insbesondere auf Basis der DIN EN ISO 2062:2010-04 bestimmt werden.

Zudem weist das wärmeschrumpfbare elastische Kunststoffgarn, welches auch nach erfolgter Wärmeschrumpfbehandlung seine elastischen Eigenschaften zumindest teilweise beibehält, eine Bruchdehnung von mehr als 55 % bei 20 °C vor. Die Bruchdehnung wird auf Basis der DIN EN ISO 2062:2010-04 Z. bestimmt.

Darüber hinaus kann das wärmeschrumpfbare elastische Kunststoffgarn, welches auch nach erfolgter Wärmeschrumpfbehandlung seine elastischen Eigenschaften zumindest teilweise beibehält, eine Feinheitsfestigkeit im Bereich von 15 cN/tex bis 130 cN/tex, insbesondere im Bereich von 25 cN/tex bis 110 cN/tex, vorzugsweise im Bereich von 35 cN/tex bis 100 cN/tex, bevorzugt im Bereich von 35 cN/tex bis 70 cN/tex, aufweisen. Die Feinheitsfestigkeit kann insbesondere bei einer Temperatur von 10 °C bis 100 °C, insbesondere 10 °C bis 50 °C, insbesondere bei etwa 20 °C vorliegen. Die Feinheitsfestigkeit kann insbesondere auf Basis der DIN 53 816 bzw. der DIN 53 834 (Teil 1 bis 3) oder der DIN EN ISO 2062:2010-04 bestimmt werden.

Weiterhin kann das wärmeschrumpfbare elastische Kunststoffgarn, welches auch nach erfolgter Wärmeschrumpfbehandlung seine elastischen Eigenschaften zumindest teilweise beibehält, eine Schrumpfkraft im Bereich von 15 cN bis 1.100 cN, insbesondere im Bereich von 25 cN bis 1.000 cN, vorzugsweise im Bereich von 40 cN bis 900 cN, bevorzugt im Bereich von 50 cN bis 500 cN, aufweisen.

Zudem kann das wärmeschrumpfbare elastische Kunststoffgarn, welches auch nach erfolgter Wärmeschrumpfbehandlung seine elastischen Eigenschaften zumindest teilweise beibehält, eine Schrumpfkraft im Bereich von 0,5 cN/tex bis 15 cN/tex, insbesondere im Bereich von 1 cN/tex bis 10 cN/tex, vorzugsweise im Bereich von 1,5 cN/tex bis 5 cN/tex, bevorzugt im Bereich von 2 cN/tex bis 4 cN/tex, aufweisen.

Die vorgenannte Schrumpfkraft kann insbesondere bei einer Schrumpftemperatur bzw. Temperatur von 140 °C bis 240 °C, insbesondere 160 °C bis 200 °C, vorzugsweise etwa 180 °C, vorliegen. Die Schrumpfkraft kann insbesondere auf Basis der DIN 53 866 (Teil 12), insbesondere bei einer Behandlungsdauer von 20 s bei Behandlung in Luft bzw. mit einer Vorspannkraft von 1 cN ermittelt werden.

Das wärmeschrumpfbare elastische Kunststoffgarn, welches auch nach erfolgter Wärmeschrumpfbehandlung seine elastischen Eigenschaften zumindest teilweise beibehält, kann zudem einen Wärmeschrumpf (Wärmeschrumpfbarkeit) im Bereich von 2 % bis 60 %, insbesondere im Bereich von 3 % bis 40 %, vorzugsweise im Bereich von 4 % bis 35 %, bevorzugt im Bereich von 5 % bis 25 %, bezogen auf die Länge im nichtgeschrumpften Zustand, aufweisen. Der vorgenannte Wärmeschrumpf liegt insbesondere bei einer Schrumpftemperatur bzw. Temperatur von 60 °C bis 140 °C, insbesondere 80 °C bis 120 °C, vorzugsweise etwa 100 °C, und/oder insbesondere bei einer Wärmeschrumpfdauer im Bereich von 1 min bis 20 min, insbesondere 5 min bis 15 min, vorzugsweise etwa 10 min, vor, und zwar insbesondere unter lastfreien Bedingungen und/oder Luft als umgebendes Medium. Zur Bestimmung des Wärmeschrumpfes kann dabei insbesondere auf die DIN 53 866 verwiesen werden.

Weiterhin kann das wärmeschrumpfbare elastische Kunststoffgarn, welches auch nach erfolgter Wärmeschrumpfbehandlung seine elastischen Eigenschaften zumindest teilweise beibehält, einen Restwärmeschrumpf (Restwärmeschrumpfbarkeit) im Bereich von 1 % bis 35 %, insbesondere im Bereich von 2 % bis 30 %, vorzugsweise im Bereich von 3 % bis 30 %, bezogen auf die Länge im nichtgeschrumpften und/oder vorgeschrumpften Zustand, aufweisen. Der vorgenannte Restwärmeschrumpf liegt insbesondere bei einer Temperatur von 60 °C bis 160 °C, insbesondere 80 °C bis 140 °C, vorzugsweise etwa 120 °C, und/oder insbesondere bei einer (Rest-)Wärmeschrumpfdauer im Bereich von 1 min bis 20 min, insbesondere 5 min bis 15 min, vorzugsweise etwa 10 min, und/oder bei einer Last von 10 g bis 20 g, insbesondere etwa 15 g und/oder unter Verwendung von Luft als umgebendes Medium vor.

Was das erfindungsgemäße Flächengebilde 1, insbesondere mit Wärmeschrumpfeigenschaften und elastischen Eigenschaften, weiterhin anbelangt, so kann dieses erfindungsgemäß eine Dichte an Schussfäden 2, 2a im Bereich von 5 bis 150 Schussfäden pro cm, insbesondere im Bereich von 10 bis 100 Schussfäden pro cm, bevorzugt im Bereich von 15 bis 75 Schussfäden pro cm, aufweisen.

Zudem kann das Flächengebilde 1 nach der Erfindung eine Dichte an Kettfäden 3, 3a im Bereich von 5 bis 150 Kettfäden pro cm, insbesondere im Bereich von 10 bis 100 Kettfäden pro cm, bevorzugt im Bereich von 15 bis 75 Kettfäden pro cm, aufweisen.

Im Allgemeinen kann das textile Flächengebilde 1 nach der Erfindung ein Flächengewicht im Bereich von 20 g/m² bis 1.500 g/m², insbesondere im Bereich von 40 g/m² bis 1.000 g/m², bevorzugt im Bereich von 60 g/m² bis 500 g/m², aufweisen.

Erfindungsgemäß kann es zudem vorgesehen sein, dass das Flächengebilde 1 bzw. das Garnsystem 2, 2a, 3, 3a, insbesondere der Garnverbund, d.h. das Garnsystem mit einer Vielzahl an Schussfäden 2, 2a und einer Vielzahl an Kettfäden 3, 3a, mindestens ein natürliches Garn (Naturgarn) und/oder mindestens ein synthetisches Garn (Chemiegarn) aufweist, insbesondere wobei das natürliche Garn und/oder das synthetische Garn ausgewählt ist aus der Gruppe von Wollfasern bzw. -garnen, Baumwollfasern bzw. -garnen (CO), Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA); Polyvinylalkoholen (PVAL); Polyurethanen; Polyvinylestern; (Meth-)Acrylaten; sowie deren Kombinationen und/oder Mischungen.

Für weitergehende Einzelheiten insbesondere zu dem Begriff der Textilgarne bzw. -fasern - weiter synonym auch als textile Faserstoffe bezeichnet - kann beispielsweise verwiesen werden auf Römpp Chemielexikon, Georg Thieme Verlag Stuttgart/New York, Band 6, 1999, Seiten 4477 bis 4479, Stichwort: "Textilfasern". Insbesondere wird im Rahmen der vorliegenden Erfindung der Begriff der Textilgarne bzw. -fasern als eine Sammelbezeichnung für sämtliche Garne bzw. Fasern, die sich textil verarbeiten lassen, verstanden. Gemeinsam ist den Textilgarnen bzw. -fasern eine im Vergleich zu ihrem Querschnitt große Länge sowie ausreichende Festigkeit und Biegsamkeit, wobei nach Herkunft und stofflicher Beschaffenheit eine Unterteilung in verschiedene Gruppen erfolgen kann. Insbesondere können die im Rahmen der vorliegenden Erfindung im Allgemeinen vorgesehenen Garne bzw. Fasern in Form von (Textil-)Garnen bzw. (Textil-)Fäden eingesetzt werden.

Insbesondere verhält es sich erfindungsgemäß dabei derart, dass die nicht von dem wärmeschrumpfbaren elastischen Kunststoffgarn ausgebildeten Schussfäden 2 und/oder Kettfäden 3 von dem weiteren Garn, wie zuvor definiert, gebildet sind. Hierzu können in ein und demselben Flächengebilde 1 auch unterschiedliche bzw. voneinander verschiedene Garne eingesetzt werden.

Folglich verhält es sich erfindungsgemäß insbesondere derart, dass die nicht von dem wärmeschrumpfbaren elastischen Kunststoffgarn, welches auch nach erfolgter Wärmeschrumpfbehandlung seine elastischen Eigenschaften zumindest teilweise beibehält, gebildeten Schussfäden 2 und/oder Kettfäden 3 von einem natürlichen Garn (Naturgarn) und/oder einem synthetischen Garn (Chemiegarn), wie zuvor definiert, gebildet werden, und zwar insbesondere mit der Maßgabe, dass es sich hierbei nicht um ein wärmschrumpfbares unelastisches (Kunststoff-)Garn und/oder nicht um ein nichtwärmeschrumpfbares elastisches (Kunststoff-)Garn handelt (vgl. obige Ausführungen).

Bei den vorgenannten natürlichen Garnen bzw. synthetischen Garnen kann es insbesondere um nichtwärmeschrumpfbare und/oder unelastische Garne handeln.

Weiterhin kann das textile Flächengebilde 1 nach der Erfindung das natürliche Garn und/oder das synthetische Garn in einer Menge im Bereich von 0,5 Gew.-% bis 99 Gew.-%, insbesondere im Bereich von 1 Gew.-% bis 95 Gew.-%, vorzugsweise im Bereich von 5 Gew.-% bis 90 Gew.-%, bevorzugt im Bereich von 10 Gew.-% bis 75 Gew.-%, besonders bevorzugt im Bereich von 15 Gew.-% bis 50 Gew.-%, bezogen auf das Flächengebilde 1, aufweisen.

Im Allgemeinen sollte das textile Flächengebilde 1 nach der Erfindung einen Schiebewiderstand, insbesondere Nahtschiebewiderstand, insbesondere jeweils bezogen auf die Kettrichtung oder Schussrichtung, von mindestens 40 N, insbesondere mindestens 50 N, vorzugsweise mindestens 60 N, bevorzugt mindestens 80 N, besonders bevorzugt mindestens 100 N, aufweisen. Zur Bestimmung kann auf die DIN 53 868 verwiesen werden.

Zudem sollte das textile Flächengebilde 1 nach der Erfindung eine Zugfestigkeit, insbesondere jeweils bezogen auf die Kettrichtung oder Schussrichtung, von mindestens 60 N, insbesondere mindestens 80 N, vorzugsweise mindestens 100 N, bevorzugt mindestens 120 N, aufweisen. Hierzu kann auch auf die EN ISO 13934-1 verwiesen werden.

Das textile Flächengebilde 1 ist erfindungsgemäß in Schussrichtung und in Kettrichtung elastisch ausgebildet. In diesem Zusammenhang kann die Elastizität bzw. die Gesamtdehnung des Flächengebildes in Schussrichtung und/oder in Kettrichtung, unabhängig voneinander, insbesondere bei einer Zugkraft von 25 N, im Bereich von 2 % bis 25 %, insbesondere im Bereich von 5 % bis 20 %, vorzugsweise im Bereich von 10 % bis 20 %, insbesondere bezogen auf die Länge des Flächengebildes in Schussrichtung und/oder in Kettrichtung und im ungedehnten Zustand des Flächengebildes, liegen. Zudem kann das Flächengebilde 1, insbesondere in Schussrichtung bzw. in Kettrichtung, insbesondere bei einer Zugkraft von 25 N, eine bleibende Dehnung von höchstens 2 %, insbesondere höchstens 1 %, vorzugsweise höchstens 0,5 %, bevorzugt höchstens 0,1 %, insbesondere bezogen auf die Länge des Flächengebildes in Schussrichtung und/oder in Kettrichtung und im ungedehnten Zustand des Flächengebildes, aufweisen. Hierzu kann insbesondere auf die DIN 53 360 verwiesen werden. Die vorgenannten Werte können beispielsweise mit einer Universalprüfmaschine mit der Bezeichnung Zwick 1455 insbesondere bei einer Einspannlänge des Materials von 200 mm, einer Messlänge von 100 mm und einer Probenbreite von 50 mm unter Normklima (DIN EN ISO 139) ermittelt werden.

In diesem Zusammenhang weist das erfindungsgemäße textile Flächengebilde 1 als solches auch eine hervorragende Wärmeschrumpfbarkeit auf: So kann das Flächengebilde 1, insbesondere in Schussrichtung und/oder in Kettrichtung, in Schussrichtung und in Kettrichtung, unabhängig voneinander, einen Wärmeschrumpf (Wärmeschrumpfbarkeit) im Bereich von 2 % bis 60 %, insbesondere im Bereich von 3 % bis 40 %, vorzugsweise im Bereich von 4 % bis 35 %, bevorzugt im Bereich von 5 % bis 25 %, bezogen auf die Länge des Flächengebildes in Schussrichtung und/oder in Kettrichtung im nichtgeschrumpften Zustand, aufweisen. Die diesbezüglichen Wärmeschrumpfwerte liegen insbesondere bei einer Temperatur von 60 °C bis 160 °C, insbesondere 80 °C bis 140 °C, vorzugsweise etwa 120 °C, und/oder insbesondere bei einer Wärmeschrumpfdauer im Bereich von 1 min bis 20 min, insbesondere 5 min bis 15 min, vorzugsweise etwa 10 min, vor, und zwar insbesondere unter Verwendung von Luft als umgebendes Medium und/oder unter lastfreier Schrumpfung. Diesbezüglich kann auch auf obige Ausführungen zu dem Wärmeschrumpfverhalten des wärmeschrumpfbaren elastischen Kunststoffgarns verwiesen werden.

Das erfindungsgemäße textile Flächengebilde 1 zeichnet sich somit insgesamt durch selbsttragende Eigenschaften, eine hohe Wärmeschrumpfbarkeit und eine hohe Elastizität aus, was zu einem hervorragenden Rückstellverhalten nach Kraftbeanspruchung führt, so dass das erfindungsgemäße Material auch von daher im besonderen Maße zur Verwendung als Bespannung bzw. Bezug von Träger- bzw. Rahmenstrukturen insbesondere von Möbelelementen geeignet ist.

Was das textile Flächengebilde 1 nach der Erfindung weiterhin anbelangt, so kann dieses beispielsweise zur Ausbildung entsprechender Bezüge bzw. Bespannungen wärmegeschrumpft sein, insbesondere bei Temperaturen im Bereich von 60 °C bis 140 °C, insbesondere im Bereich von 80 °C bis 120 °C, vorzugsweise bei etwa 100 °C. Auf dieser Weise kann das nachfolgend beschriebene wärmegeschrumpfte textile Flächengebilde 1' nach der Erfindung erhalten werden.

Vorliegend beschrieben ist auch ein wärmegeschrumpftes textiles Flächengebilde (Flächenmaterial) 1', insbesondere wärmegeschrumpftes textiles Bespannungsmaterial, in Form eines wärmegeschrumpften Gewebes, bevorzugt für Möbel, wie Sitz- und/oder Liegemöbel, mit elastischen Eigenschaften, insbesondere wärmegeschrumpftes textiles Gewebe mit elastischen Eigenschaften als Bespannungsmaterial für Möbel wie Sitz- bzw. Liegemöbel,
wobei das wärmegeschrumpfte textile Flächengebilde 1' aus einem das wärmegeschrumpfte textile Flächengebilde 1' ausbildenden Garnsystem 2', 2a', 3', 3a', insbesondere einem Garnverbund, mit einer Vielzahl an Schussfäden (Schüssen) 2', 2a' und einer Vielzahl an Kettfäden (Ketten) 3', 3a' aufweist oder hieraus besteht,
wobei das wärmegeschrumpfte textile Flächengebilde 1' erhältlich ist bzw. erhalten ist durch eine zumindest abschnitts- und/oder bereichsweise, vorzugsweise vollständige und/oder vollflächige Wärmebehandlung eines in den vorangehenden Ansprüchen definierten textilen Flächengebildes (Flächenmaterial) 1.

Vorliegend beschrieben ist somit auch ein wärmegeschrumpftes textiles Flächengebilde (Flächenmaterial) 1', insbesondere wärmegeschrumpftes textiles Bespannungsmaterial, in Form eines wärmegeschrumpftes Gewebes, bevorzugt für Möbel, wie Sitz- und/oder Liegemöbel, vorzugsweise mit elastischen Eigenschaften, insbesondere wärmegeschrumpftes textiles Gewebe mit elastischen Eigenschaften als Bespannungsmaterial für Möbel wie Sitz- und/oder Liegemöbel, insbesondere das zuvor beschriebene wärmegeschrumpfte textile Flächengebilde 1,
wobei das wärmegeschrumpfte textile Flächengebilde 1' aus einem das wärmegeschrumpfte textile Flächengebilde 1' ausbildenden Garnsystem 2', 2a', 3', 3a', insbesondere einem Garnverbund, mit einer Vielzahl an Schussfäden (Schüssen) 2', 2a' und einer Vielzahl an Kettfäden (Ketten) 3', 3a', besteht,
wobei das Garnsystem 2', 2a', 3', 3a', insbesondere der Garnverbund, vorzugsweise das Garnsystem mit einer Vielzahl an Schussfäden 2, 2a und einer Vielzahl an Kettfäden 3, 3a, mindestens ein wärmegeschrumpftes elastisches Kunststoffgarn, welches auch nach erfolgter Wärmeschrumpfbehandlung seine elastischen Eigenschaften zumindest teilweise beibehalten hat, aufweist oder hieraus besteht.

Was das vorliegend beschriebene wärmegeschrumpfte Flächengebilde 1' anbelangt, so kann hierzu auch auf Fig. 5 verwiesen werden.

Insbesondere kann es vorliegend vorgesehen sein, dass das wärmegeschrumpfte elastische Kunststoffgarn, welches auch nach erfolgter Wärmeschrumpfbehandlung seine elastischen Eigenschaften zumindest teilweise beibehalten hat, in Form eines einzigen Garntyps, insbesondere in Form eines einzigen Garntyps insbesondere mit zumindest im Wesentlichen identischen und/oder einheitlichen Wärmeschrumpfeigenschaften und/oder einheitlichen Elastizitätseigenschaften, eingesetzt ist und/oder vorliegt. Vorliegend kann es vorgesehen sein, dass im Falle verschiedener Kunststoffgarne des einzigen Garntyps die voneinander verschiedenen Kunststoffgarne in ihren jeweiligen Wärmeschrumpfeigenschaften und/oder in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Insbesondere kann das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', das wärmegeschrumpfte elastische Kunststoffgarn, welches auch nach erfolgter Wärmeschrumpfbehandlung seine elastischen Eigenschaften zumindest teilweise beibehalten hat, in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, aufweisen oder hieraus bestehen. Vorliegend kann es vorgesehen sein, dass im Falle verschiedener Kunststoffgarne des einzigen Garntyps die voneinander verschiedenen Kunststoffgarne in ihren jeweiligen Wärmeschrumpfeigenschaften und/oder in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Zudem kann das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', außer und/oder neben dem wärmegeschrumpften elastischen Kunststoffgarn, welches auch nach erfolgter Wärmeschrumpfbehandlung seine elastischen Eigenschaften zumindest teilweise beibehalten hat und welches in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, kein weiteres und/oder kein hiervon verschiedenes wärmegeschrumpftes elastisches Kunststoffgarn, insbesondere kein weiteres wärmegeschrumpftes elastisches Kunststoffgarn eines anderen und/oder verschiedenen Garntyps, vorzugsweise kein weiteres wärmegeschrumpftes elastisches Kunststoffgarn eines anderen und/oder verschiedenen Garntyps mit anderen und/oder verschiedenen Wärmeschrumpfeigenschaften und/oder mit anderen und/oder verschiedenen Elastizitätseigenschaften, aufweisen.

Insbesondere kann es vorliegend vorgesehen sein, dass das wärmegeschrumpfte elastische Kunststoffgarn, welches auch nach erfolgter Wärmeschrumpfbehandlung seine elastischen Eigenschaften zumindest teilweise beibehalten hat, in Form eines einzigen Garntyps, insbesondere in Form eines einzigen Garntyps mit zumindest im Wesentlichen identischen und/oder einheitlichen Elastizitätseigenschaften, eingesetzt ist und/oder vorliegt. Vorliegend kann es dabei auch vorgesehen sein, dass im Falle verschiedener Kunststoffgarne des einzigen Garntyps die voneinander verschiedenen Kunststoffgarne in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Zudem kann es vorliegend vorgesehen sein, dass das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', das wärmegeschrumpfte elastische Kunststoffgarn, welches auch nach erfolgter Wärmeschrumpfbehandlung seine elastischen Eigenschaften zumindest teilweise beibehalten hat, in Form eines einzigen Garntyps, insbesondere in Form eines einzigen Garntyps mit zumindest im Wesentlichen identischen und/oder einheitlichen Elastizitätseigenschaften, aufweist oder hieraus besteht. Vorliegend kann es dabei auch vorgesehen sein, dass im Falle verschiedener Kunststoffgarne des einzigen Garntyps die voneinander verschiedenen Kunststoffgarne in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den größeren Wert.

Weiterhin kann es vorliegend vorgesehen sein, dass das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', außer und/oder neben dem wärmegeschrumpften elastischen Kunststoffgarn, welches auch nach erfolgter Wärmeschrumpfbehandlung seine elastischen Eigenschaften zumindest teilweise beibehalten hat und welches in Form eines einzigen Garntyps, insbesondere in Form eines einzigen Garntyps mit zumindest im Wesentlichen identischen und/oder einheitlichen Elastizitätseigenschaften, keine weiteres und/oder kein hiervon verschiedenes wärmegeschrumpftes elastisches Kunststoffgarn, insbesondere kein weiteres wärmegeschrumpftes elastisches Kunststoffgarn eines anderen und/oder verschiedenen Garntyps, vorzugsweise kein weiteres wärmegeschrumpftes elastisches Kunststoffgarn eines anderen und/oder verschiedenen Garntyps mit anderen und/oder verschiedenen Elastizitätseigenschaften, aufweist.

Zudem kann es vorliegend insbesondere vorgesehen sein, dass für den Fall, dass das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', mehrere und/oder verschiedene wärmegeschrumpfte elastische Kunststoffgarne, welche auch nach erfolgter Wärmeschrumpfbehandlung ihre elastischen Eigenschaften zumindest teilweise beibehalten haben, aufweist oder hieraus besteht, sämtliche dieser wärmegeschrumpften elastischen Kunststoffgarne, welche auch nach erfolgter Wärmeschrumpfbehandlung ihre elastischen Eigenschaften zumindest teilweise beibehalten haben, vom selben Garntyp sind und/oder in Form eines einzigen Garntyps, insbesondere in Form eines einzigen Garntyps mit zumindest im Wesentlichen identischen und/oder einheitlichen Wärmeschrumpfeigenschaften und/oder mit zumindest im Wesentlichen identischen und/oder einheitlichen Elastizitätseigenschaften, vorliegen. Dabei kann es vorgesehen sein, dass im Falle verschiedener Kunststoffgarne des einzigen Garntyps die voneinander verschiedenen Kunststoffgarne in ihren jeweiligen Wärmeschrumpfeigenschaften und/oder in ihren jeweiligen Elastizitätseigenschaften um höchstens 20 %, insbesondere höchstens 10 %, vorzugsweise höchstens 5%, bevorzugt höchstens 2 %, besonders bevorzugt höchstens 1 %, voneinander abweichen, insbesondere bezogen auf den jeweils größeren Wert.

Vorliegend kann vorgesehen sein, dass das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', kein wärmegeschrumpftes unelastisches Kunststoffgarn aufweist bzw. frei von wärmegeschrumpften unelastischen Kunststoffgarnen ist.

Vorliegend ist es vorgesehen, dass das Garnsystem 2', 2a', 3', 3a', insbesondere der Garnverbund, d.h. das Garnsystem mit einer Vielzahl an Schussfäden 2', 2a' und einer Vielzahl an Kettfäden 3', 3a', kein nichtwärmeschrumpfbares elastisches Kunststoffgarn aufweist bzw. frei von nichtwärmeschrumpfbaren elastischen Kunststoffgarnen ist.

Vorliegend kann es zudem vorgesehen sein, dass die Schussfäden 2', 2a' und/oder die Kettfäden 3', 3a', insbesondere die Schussfäden 2', 2a' und die Kettfäden 3', 3a', zumindest teilweise von dem wärmegeschrumpften elastischen Kunststoffgarn, welches auch nach erfolgter Wärmeschrumpfbehandlung seine elastischen Eigenschaften zumindest teilweise beibehalten hat, gebildet sind.

Im Allgemeinen kann es vorliegend vorgesehen sein, dass die Schussfäden 2a' und/oder die Kettfäden 3a', insbesondere die Schussfäden 2a' und die Kettfäden 3a', vollständig von dem wärmegeschrumpften elastischen Kunststoffgarn, welches auch nach erfolgter Wärmeschrumpfbehandlung seine elastischen Eigenschaften zumindest teilweise beibehalten hat, gebildet sind.

Zudem kann das wärmegeschrumpfte elastische Kunststoffgarn, welches auch nach erfolgter Wärmeschrumpfbehandlung seine elastischen Eigenschaften zumindest teilweise beibehalten hat, in Form der Schussfäden 2a' (wärmegeschrumpfte Schussfäden) und/oder in Form der Kettfäden 3a' (wärmegeschrumpfte Kettfäden) vorliegen.

Insbesondere verhält es sich vorliegend derart, dass die von dem wärmegeschrumpften elastischen Kunststoffgarn, welches auch nach erfolgter Wärmeschrumpfbehandlung seine elastischen Eigenschaften zumindest teilweise beibehalten hat, gebildeten Schussfäden 2a' in Form von wärmegeschrumpften Schussfäden ausgebildet sind oder als solche vorliegen.

Zudem verhält es sich vorliegend insbesondere derart, dass die von dem wärmegeschrumpften elastischen Kunststoffgarn, welches auch nach erfolgter Wärmeschrumpfbehandlung seine elastischen Eigenschaften zumindest teilweise beibehalten hat, gebildeten Kettfäden 3a' in Form von wärmegeschrumpften Kettfäden ausgebildet sind oder als solche vorliegen.

Vorliegend kann es insbesondere vorgesehen sein, dass jeder bis jeder zwölfte, insbesondere jeder bis jeder zehnte, vorzugsweise jeder bis jeder achte, bevorzugt jeder zweite bis jeder sechste, besonders bevorzugt jeder zweite bis jeder vierte Schussfaden 2', 2a' von dem wärmegeschrumpften elastischen Kunststoffgarn, welches auch nach erfolgter Wärmeschrumpfbehandlung seine elastischen Eigenschaften zumindest teilweise beibehalten hat, gebildet ist und/oder als von dem wärmegeschrumpften elastischen Kunststoffgarn, welches auch nach erfolgter Wärmeschrumpfbehandlung seine elastischen Eigenschaften zumindest teilweise beibehalten hat, ausgebildeter wärmegeschrumpfter Schussfaden 2a' vorliegt.

Gleichermaßen kann es vorliegend vorgesehen sein, dass jeder bis jeder zwölfte, insbesondere jeder bis jeder zehnte, vorzugsweise jeder bis jeder achte, bevorzugt jeder zweite bis jeder sechste, besonders bevorzugt jeder zweite bis jeder vierte Kettfaden 3', 3a' von dem wärmegeschrumpften elastischen Kunststoffgarn, welches auch nach erfolgter Wärmeschrumpfbehandlung seine elastischen Eigenschaften zumindest teilweise beibehalten hat, gebildet ist und/oder als von dem wärmegeschrumpften elastischen Kunststoffgarn, welches auch nach erfolgter Wärmeschrumpfbehandlung seine elastischen Eigenschaften zumindest teilweise beibehalten hat, ausgebildeter wärmegeschrumpfter Kettfaden 3a' vorliegt.

Insbesondere verhält es sich vorliegend derart, dass das wärmegeschrumpfte elastische Kunststoffgarn, welches auch nach erfolgter Wärmeschrumpfbehandlung seine elastischen Eigenschaften zumindest teilweise beibehalten hat, in Form mindestens eines Grundfadens (wärmegeschrumpfter Grundfaden), insbesondere in Form mindestens eines Grundschussfadens (wärmegeschrumpfter Grundschussfaden) und/oder mindestens eines Grundkettfadens (wärmegeschrumpfter Grundkettfaden) eingearbeitet ist bzw. vorliegt.

Zudem verhält es sich vorliegend zudem insbesondere derart, dass das wärmegeschrumpfte elastische Kunststoffgarn, welches auch nach erfolgter Wärmeschrumpfbehandlung seine elastischen Eigenschaften zumindest teilweise beibehalten hat, in Form mindestens eines Füllfadens (wärmegeschrumpfter Füllfaden), insbesondere in Form mindestens eines Füllschussfadens (wärmegeschrumpfter Füllschussfaden) und/oder mindestens eines Füllkettfadens (wärmegeschrumpfter Füllkettfaden) eingearbeitet ist bzw. vorliegt.

Gleichermaßen verhält es sich vorliegend insbesondere derart, dass das wärmegeschrumpfte elastische Kunststoffgarn, welches auch nach erfolgter Wärmeschrumpfbehandlung seine elastischen Eigenschaften zumindest teilweise beibehalten hat, in Form mindestens eines Polfadens (wärmegeschrumpfter Polfaden), insbesondere in Form mindestens eines Polschussfadens (wärmegeschrumpfter Polschussfaden) und/oder mindestens eines Polkettfadens (wärmegeschrumpfter Polkettfaden) eingearbeitet ist bzw. vorliegt.

Auch sind diesbezügliche Kombinationen möglich.

Im Allgemeinen kann das vorliegend beschriebene Flächengebilde 1' das wärmegeschrumpfte elastische Kunststoffgarn, welches auch nach erfolgter Wärmeschrumpfbehandlung seine elastischen Eigenschaften zumindest teilweise beibehalten hat, in einer Menge im Bereich von 1 Gew.-% bis 100 Gew.-%, insbesondere im Bereich im Bereich von 3 Gew.-% bis 95 Gew.-%, vorzugsweise im Bereich von 5 Gew.-% bis 80 Gew.-%, bevorzugt im Bereich von 8 Gew.-% bis 50 Gew.-%, besonders bevorzugt im Bereich von 10 Gew.-% bis 40 Gew.-%, ganz besonders bevorzugt im Bereich von 15 Gew.-% bis 30 Gew.-%, bezogen auf das Flächengebilde 1', enthalten.

Insbesondere kann es vorliegend vorgesehen sein, dass das insbesondere als Schussfaden 2a', insbesondere Wärmeschrumpfschussfaden, und/oder als Kettfaden 3a', insbesondere Wärmeschrumpfkettfaden, ausgebildete wärmegeschrumpfte elastische Kunststoffgarn, welches auch nach erfolgter Wärmeschrumpfbehandlung seine elastischen Eigenschaften zumindest teilweise beibehalten hat, zum jeweils benachbarten Garn um das 0,01fache bis 2,5fache, insbesondere um das 0,05fache bis 2fache, vorzugsweise um das 0,075fache bis 1,5fache, bevorzugt um das 0,1fache bis 1fache, besonders bevorzugt um das 0,15fache bis 0,5fache, des mittleren Garndurchmessers des wärmegeschrumpften elastischen Kunststoffgarn, welches auch nach erfolgter Wärmeschrumpfbehandlung seine elastischen Eigenschaften zumindest teilweise beibehalten hat, bezogen auf den geschrumpften Zustand, beabstandet ist.

Vorliegend kann das wärmegeschrumpfte Flächengebilde 1' eine Dichte an Schussfäden 2', 2a' im Bereich von 7 bis 200 Schussfäden pro cm, insbesondere im Bereich von 12 bis 150 Schussfäden pro cm, bevorzugt im Bereich von 20 bis 100 Schussfäden pro cm, aufweisen. Zudem kann das wärmegeschrumpfte Flächengebilde 1' eine Dichte an Kettfäden 3', 3a' im Bereich von 7 bis 200 Kettfäden pro cm, insbesondere im Bereich von 12 bis 150 Kettfäden pro cm, bevorzugt im Bereich von 20 bis 100 Kettfäden pro cm, aufweisen.

Insgesamt kann durch die Wärmeschrumpfung eine Verdichtung des wärmegeschrumpften Flächengebildes 1' vorliegen.

Vorliegend kann das wärmegeschrumpfte textile Flächengebilde 1' in einem Bereich von 1 % bis 55 %, insbesondere in einem Bereich von 2 % bis 50 %, vorzugsweise in einem Bereich von 3 % bis 40 %, bevorzugt in einem Bereich von 4 % bis 30 %, besonders bevorzugt in einem Bereich von 5 % bis 25 %, ganz besonders bevorzugt in einem Bereich von 10 % bis 20 %, bezogen auf die jeweilige Erstreckungsrichtung des nichtwärmegeschrumpften textilen Flächengebildes 1 und/oder bezogen auf die Länge und/oder Breite des nichtwärmegeschrumpften textilen Flächengebildes 1, geschrumpft sein.

Mit andere Worten kann das wärmegeschrumpfte textile Flächengebilde 1' in einem um 1 % bis 55 %, insbesondere um 2 % bis 50 %, vorzugsweise um 3 % bis 40 %, bevorzugt um 4 % bis 30 %, besonders bevorzugt um 5 % bis 25 %, ganz besonders bevorzugt um 10 % bis 20 %, bezogen auf die jeweilige Erstreckungsrichtung des nichtwärmegeschrumpften textilen Flächengebildes 1 und/oder bezogen auf die Länge und/oder Breite des nichtwärmegeschrumpften textilen Flächengebildes 1, geschrumpft sein.

Insbesondere kann das wärmegeschrumpfte textile Flächengebilde 1' nach Wärmeschrumpfung eine Restwärmeschrumpfbarkeit in einem Bereich von 1 % bis 50 %, insbesondere in einem Bereich von 2 % bis 40 %, vorzugsweise in einem Bereich von 3 % bis 30 %, bevorzugt in einem Bereich von 4 % bis 20 %, besonders bevorzugt in einem Bereich von 5 % bis 10 %, bezogen auf die Wärmeschrumpfbarkeit des nichtwärmegeschrumpften textilen Flächengebildes 1, aufweisen.

Vorliegend kann das wärmegeschrumpfte elastische Kunststoffgarn, welches auch nach erfolgter Wärmeschrumpfbehandlung seine elastischen Eigenschaften zumindest teilweise beibehalten hat, einen Durchmesser im Bereich von 0,06 mm bis 3 mm, insbesondere im Bereich von 0,08 mm bis 2 mm, vorzugsweise im Bereich von 0,12 mm bis 1,75 mm, bevorzugt im Bereich von 0,15 mm bis 1,5 mm, besonders bevorzugt im Bereich von 0,2 mm bis 1 mm aufweisen.

Zudem kann der Durchmesser und/oder der Titer des wärmegeschrumpften elastischen Kunststoffgarns, welches auch nach erfolgter Wärmeschrumpfbehandlung seine elastischen Eigenschaften zumindest teilweise beibehalten hat, um einen Faktor 1,05 bis 3, insbesondere um einen Faktor 1,1 bis 2,5, vorzugsweise um einen Faktor 1,2 bis 2, erhöht sein, bezogen auf den Durchmesser des wärmeschrumpfbaren elastischen Kunststoffgarns, welches auch nach erfolgter Wärmeschrumpfbehandlung seine elastischen Eigenschaften zumindest teilweise beibehält, im nichtgeschrumpften Zustand.

Folglich kann durch die Wärmeschrumpfung die Dicke bzw. der Titer des wärmegeschrumpften Kunststoffgarns im Vergleich im Vergleich zum nichtgeschrumpften Zustand erhöht sein, was die Stabilität bzw. den Schiebewiderstand erhöhen kann.

Insbesondere kann das wärmegeschrumpfte Flächengebilde 1' einen Schiebewiderstand, insbesondere Nahtschiebewiderstand, insbesondere jeweils bezogen auf die Kettrichtung oder Schussrichtung, von mindestens 45 N, insbesondere mindestens 55 N, vorzugsweise mindestens 70 N, bevorzugt mindestens 100 N, besonders bevorzugt mindestens 120 N, aufweisen.

Gleichermaßen kann das wärmegeschrumpfte Flächengebilde 1' eine Zugfestigkeit, insbesondere jeweils bezogen auf die Kettrichtung oder Schussrichtung, von mindestens 70 N, insbesondere mindestens 90 N, vorzugsweise mindestens 120 N, bevorzugt mindestens 140 N, aufweisen.

Darüber hinaus kann der Schiebewiderstand, insbesondere Nahtschiebewiderstand, insbesondere jeweils bezogen auf die Kettrichtung oder Schussrichtung, und/oder die Zugfestigkeit, insbesondere jeweils bezogen auf die Kettrichtung oder Schussrichtung, des wärmegeschrumpften Flächengebildes 1' um einen Faktor 1,05 bis 2,5, insbesondere um einen Faktor 1,1 bis 2, vorzugsweise um einen Faktor 1,15 bis 1,5, erhöht sein, bezogen auf das nichtwärmegeschrumpfte Flächengebilde 1.

Im Allgemeinen kann das wärmegeschrumpfte elastische Kunststoffgarn, welches auch nach erfolgter Wärmeschrumpfbehandlung seine elastischen Eigenschaften zumindest teilweise beibehalten hat, eine Restelastizität von mindestens 50 %, insbesondere mindestens 60 %, vorzugsweise mindestens 70 %, bevorzugt mindestens 80 %, besonders bevorzugt mindestens 90 %, ganz besonders bevorzugt mindestens 95 %, bezogen auf die Elastizität des wärmeschrumpfbaren elastischen Kunststoffgarns, welches auch nach erfolgter Wärmeschrumpfbehandlung seine elastischen Eigenschaften zumindest teilweise beibehält, im nichtgeschrumpften Zustand, aufweisen.

Zudem kann das wärmegeschrumpfte elastische Kunststoffgarn, welches auch nach erfolgter Wärmeschrumpfbehandlung seine elastischen Eigenschaften zumindest teilweise beibehalten hat, eine Restelastizität im Bereich von 50 % bis 99 %, insbesondere im Bereich von 60 % bis 95 %, vorzugsweise im Bereich von 70 % bis 90 %, bezogen auf die Elastizität des wärmeschrumpfbaren elastischen Kunststoffgarns, welches auch nach erfolgter Wärmeschrumpfbehandlung seine elastischen Eigenschaften zumindest teilweise beibehält, im nichtgeschrumpften Zustand, aufweisen.

Im Allgemeinen kann somit im Falle eines unvollständigen Wärmeschrumpfs ein erneuter bzw. nachfolgender Wärmeschrumpf in Bezug auf das wärmegeschrumpfte textile Flächengebilde durchgeführt werden.

Hinsichtlich der Bestimmung der vorangehend für das wärmegeschrumpfte textile Flächengebilde 1' angegebenen Eigenschaften bzw. Parameter kann auf die entsprechenden Ausführungen zu dem erfindungsgemäßen textilen Flächengebilde 1 mit dem dort angegebenen Normen bzw. Verfahren verwiesen werden, welche vorliegend für das wärmegeschrumpfte Flächengebilde 1' bzw. das wärmegeschrumpfte elastische Kunststoffgarn, welches auch nach erfolgter Wärmeschrumpfbehandlung seine elastischen Eigenschaften zumindest teilweise beibehalten hat, entsprechend gelten.

Ein weiterer Gegenstand der vorliegenden Erfindung - gemäß einem **zweiten** Aspekt der vorliegenden Erfindung - ist zudem die Verwendung des textilen Flächengebildes nach der Erfindung, welches insbesondere Wärmeschrumpfeigenschaften und elastische Eigenschaften aufweist, wie zuvor definiert, zur Erzeugung bzw. Herstellung eines wärmegeschrumpften textilen Flächengebildes, wie zuvor definiert.

Hierzu kann zum Erhalt des wärmegeschrumpften textilen Flächengebildes, wie vorliegend beschrieben, das erfindungsgemäße textile Flächengebilde, welches vorzugsweise Wärmeschrumpfeigenschaften und elastische Eigenschaften aufweist, wärmegeschrumpft werden.

Ein weiterer Gegenstand der vorliegenden Erfindung - gemäß einem **dritten** Aspekt der vorliegenden Erfindung - ist zudem das erfindungsgemäße Verfahren zur Herstellung eines wärmegeschrumpften textilen Flächengebildes, wie zuvor definiert, wobei ein textiles Flächengebilde, insbesondere mit Wärmeschrumpfeigenschaften und elastischen Eigenschaften, wie zuvor definiert, mittels Wärmebehandlung (wärme-)geschrumpft wird.

In diesem Zusammenhang kann die Wärmebehandlung bei einer Temperatur im Bereich von 60 °C bis 140 °C, insbesondere im Bereich von 80 °C bis 120 °C, vorzugsweise bei etwa 100 °C, durchgeführt werden bzw. erfolgen.

Insbesondere kann die Wärmebehandlung für eine Zeitdauer in einem Bereich von 0,5 min bis 30 min, insbesondere in einem Bereich von 1 min bis 20 min, vorzugsweise in einem Bereich von 5 min bis 15 min, durchgeführt werden.

Insbesondere kann die Wärmebehandlung in Luftatmosphäre bzw. in Luft als umgebendes Medium durchgeführt werden.

Die zugrundeliegende Wärme- bzw. Schrumpfbehandlung kann hinsichtlich der Schrumpfbedingungen in Bezug auf die Temperatur und Zeitdauer insbesondere derart ausgestaltet werden, dass der gewünschte Wärmeschrumpf des textilen Flächengebildes erhalten wird. Der Fachmann ist dabei jederzeit in der Lage, die entsprechenden Schrumpfbedingungen, insbesondere die Schrumpftemperatur und die Schrumpfdauer, in Abhängigkeit von dem gewünschten Wärmeschrumpf sowie in Abhängigkeit von dem zu schrumpfenden Material auszuwählen bzw. einzustellen.

Weiterhin betrifft die vorliegende Erfindung - gemäß einem **vierten** Aspekt der vorliegenden Erfindung - auch die Verwendung des textilen mit Wärmeschrumpfeigenschaften und elastischen Eigenschaften, wie zuvor definiert, im Bereich der Möbelindustrie, Automobilindustrie oder dergleichen.

Beispielsweise eignet sich das erfindungsgemäße Material zur Herstellung bzw. Verwendung als Bespannung von Träger- bzw. Rahmenstrukturen oder dergleichen, insbesondere für den Bereich von Sitzmöbeln bzw. Liegemöbeln.

Diesbezüglich ist vorliegend auch die Verwendung des wärmegeschrumpften textilen Flächengebildes, wie zuvor definiert, im Bereich der Möbelindustrie, Automobilindustrie oder dergleichen beschrieben.

In diesem Zusammenhang betrifft die vorliegende Erfindung auch - gemäß einem **fünften** Aspekt der vorliegenden Erfindung - die Verwendung des textilen Flächengebildes mit Wärmeschrumpfeigenschaften und elastischen Eigenschaften, wie zuvor definiert, zur Herstellung von Möbelelementen, insbesondere Sitz- und/oder Liegemöbelelementen, vorzugsweise Rückenlehnen, Sitzelementen und/oder Liegeelementen oder dergleichen, bzw. zur Herstellung von dekorativen Elementen, Hohlraumkanälen, Automobilzubehör oder dergleichen.

Im Rahmen der vorliegenden Erfindung ist der Begriff "Sitzmöbel" bzw. "Liegemöbel" dabei breit zu verstehen: So beziehen sich diese Begriffe in nicht beschränkender Weise auf Sitzgelegenheiten bzw. Sitzelemente aller Art sowie Liegegelegenheiten bzw. Liegeelemente aller Art, wie beispielsweise Stühle, Liegestühle, Liegen, Sessel, Sofas, Bänke, Couchgarnituren, Hocker und dergleichen. Insbesondere kann das Sitz- bzw. Liegemöbel dergestalt sein, dass es das erfindungsgemäße Flächengebilde, insbesondere mit Wärmeschrumpfeigenschaften und elastischen Eigenschaften, bzw. das wärmegeschrumpfte Flächengebilde nach der Erfindung aufweist, insbesondere in Form von Bespannungen, Bezügen oder dergleichen.

Weiterer Gegenstand der vorliegenden Erfindung - gemäß einem **sechsten** Aspekt der vorliegenden Erfindung - ist zudem das Verfahren zur Herstellung von Möbelelementen, insbesondere Sitz- und/oder Liegemöbelelementen, vorzugsweise Rückenlehnen, Sitzelementen und/oder Liegeelementen oder dergleichen, und/oder zur Herstellung von dekorativen Elementen, Hohlraumkanälen, Automobilzubehör oder dergleichen, wobei ein textiles Flächengebilde mit Wärmeschrumpfeigenschaften und elastischen Eigenschaften, wie zuvor definiert, auf eine Träger- und/oder Rahmenvorrichtung oder dergleichen aufgebracht und/oder hieran befestigt wird und nachfolgend das textile Flächengebilde mit Wärmeschrumpfeigenschaften und elastischen Eigenschaften, wie zuvor definiert, zumindest abschnitts- und/oder bereichsweise, vorzugsweise vollständig und/oder vollflächig wärmegeschrumpft wird, insbesondere so dass eine zumindest im Wesentlichen faltenfreie und vorzugsweise unter Eigenspannung stehende elastische Bespannung der Träger- und/oder Rahmenvorrichtung mit dem wärmegeschrumpften textilen Flächengebilde, wie zuvor definiert, resultiert. Hierbei kann es sich insbesondere um freitragende bzw. unterbaufreie Bespannungen oder Bezüge handeln.

Schließlich betrifft die vorliegende Erfindung - gemäß einem **siebten** Aspekt der vorliegenden Erfindung - auch Möbelelemente, insbesondere Sitz- und/oder Liegemöbelelemente, vorzugsweise Rückenlehnen und/oder Sitzelemente und/oder Liegeflächenelemente oder dergleichen, und/oder dekorative Elemente, Hohlraumkanäle, Automobilzubehör oder dergleichen, welche mindestens ein textiles Flächengebilde mit Wärmeschrumpfeigenschaften und elastischen Eigenschaften, wie zuvor definiert, aufweisen.

Diesbezüglich sind vorliegend auch Möbelelemente, insbesondere Sitz- und/oder Liegemöbelelemente, vorzugsweise Rückenlehnen und/oder Sitzelemente und/oder Liegeflächenelemente oder dergleichen, und/oder dekorative Elemente, Hohlraumkanäle, Automobilzubehör oder dergleichen, beschrieben, welche mindestens ein wärmegeschrumpftes textiles Flächengebilde, wie zuvor definiert, aufweisen.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

### Bezugszeichenliste:

- 1: textiles Flächengebilde (Flächenmaterial), vorzugsweise mit Wärmeschrumpfeigenschaften
- 2: Schussfaden des textilen Flächengebildes (Flächenmaterial) 1
- 2a: Schussfaden des textilen Flächengebildes (Flächenmaterial) 1 in Form eines wärmeschrumpfbaren elastischen Kunststoffgarns, welches auch nach erfolgter Wärmeschrumpfbehandlung seine elastischen Eigenschaften zumindest teilweise beibehält ("Wärmeschrumpfschussfaden")
- 3: Kettfaden des textilen Flächengebildes (Flächenmaterial) 1
- 3a: Kettfaden des textilen Flächengebildes (Flächenmaterial) 1 in Form eines wärmeschrumpfbaren elastischen Kunststoffgarns, welches auch nach erfolgter Wärmeschrumpfbehandlung seine elastischen Eigenschaften zumindest teilweise beibehält ("Wärmeschrumpfkettfaden")
- 2, 2a, 3, 3a: Garnsystem, insbesondere Garnverbund, des textilen Flächengebildes (Flächenmaterial) 1, d.h. Garnsystem mit einer Vielzahl an Schussfäden (Schüssen) und einer Vielzahl an Kettfäden (Ketten)
- 1': wärmegeschrumpftes textiles Flächengebilde (Flächenmaterial), vorzugsweise mit Wärmeschrumpfeigenschaften
- 2': Schussfaden des wärmegeschrumpften textilen Flächengebildes (Flächenmaterial) 1'
- 2a': Schussfaden des wärmegeschrumpften textilen Flächengebildes (Flächenmaterial) 1' in Form eines wärmegeschrumpften elastischen Kunststoffgarns, welches auch nach erfolgter Wärmeschrumpfbehandlung seine elastischen Eigenschaften zumindest teilweise beibehalten hat ("wärmegeschrumpfter Schussfaden")
- 3': Kettfaden des wärmegeschrumpften textilen Flächengebildes (Flächenmaterial) 1'
- 3a': Kettfaden des wärmegeschrumpften textilen Flächengebildes (Flächenmaterial) 1' in Form eines wärmegeschrumpften elastischen Kunststoffgarns, welches auch nach erfolgter Wärmeschrumpfbehandlung seine elastischen Eigenschaften zumindest teilweise beibehalten hat ("wärmegeschrumpfter Kettfaden")
- 2', 2a', 3', 3a': Garnsystem, insbesondere Garnverbund, des wärmegeschrumpften textilen Flächengebildes (Flächenmaterial) 1', d.h. Garnsystem mit einer Vielzahl an Schussfäden (Schüssen) und einer Vielzahl an Kettfäden (Ketten)

## Patentansprüche

1. Textiles Flächengebilde (1) in Form eines Gewebes mit Wärmeschrumpfeigenschaften und elastischen Eigenschaften
wobei das textile Flächengebilde (1) aus einem das textile Flächengebilde (1) ausbildenden Garnsystem (2, 2a, 3, 3a) mit einer Vielzahl an Schussfäden (2, 2a) und einer Vielzahl an Kettfäden (3, 3a) besteht,
wobei das Garnsystem (2, 2a, 3, 3a) mindestens ein wärmeschrumpfbares elastisches Kunststoffgarn, welches auch nach erfolgter Wärmeschrumpfbehandlung seine elastischen Eigenschaften zumindest teilweise beibehält, aufweist oder hieraus besteht, wobei das wärmeschrumpfbare elastische Kunststoffgarn auf Basis eines wärmeschrumpfbaren elastomeren und thermoplastischen Polyesters ausgebildet ist,
wobei das Garnsystem (2, 2a, 3, 3a) frei von nichtwärmeschrumpfbaren elastischen Kunststoffgarnen ist und
wobei das Flächengebilde (1) in Schussrichtung und in Kettrichtung elastisch ausgebildet ist, **dadurch gekennzeichnet, dass**
das wärmeschrumpfbare elastische Kunststoffgarn eine Bruchdehnung von mehr als 55 % bei 20 °C, bestimmt gemäß DIN EN ISO 2062:2010-04, aufweist.

2. Flächengebilde nach Anspruch 1,
wobei das Flächengebilde (1) das wärmeschrumpfbare elastische Kunststoffgarn in einer Menge im Bereich von 1 Gew.-% bis 100 Gew.-%, insbesondere im Bereich im Bereich von 3 Gew.-% bis 95 Gew.-%, vorzugsweise im Bereich von 5 Gew.-% bis 80 Gew.-%, bevorzugt im Bereich von 8 Gew.-% bis 50 Gew.-%, besonders bevorzugt im Bereich von 10 Gew.-% bis 40 Gew.-%, ganz besonders bevorzugt im Bereich von 15 Gew.-% bis 30 Gew.-%, bezogen auf das Flächengebilde (1), enthält.

3. Flächengebilde nach Anspruch 1 oder 2,
wobei das wärmeschrumpfbare elastische Kunststoffgarn als Monofilament oder als Multifilament, bevorzugt als Monofilament, ausgebildet ist; und/oder
wobei das wärmeschrumpfbare elastische Kunststoffgarn als Stapelfasergarn ausgebildet ist.

4. Verwendung eines textilen Flächengebildes (1), wie in einem der Ansprüche 1 bis 3 definiert, zur Herstellung eines wärmegeschrumpften textilen Flächengebildes (1'), wobei das wärmegeschrumpfte textile Flächengebilde (1') aus einem das wärmegeschrumpfte textile Flächengebilde (1') ausbildenden Garnsystem (2', 2a', 3', 3a') mit einer Vielzahl an Schussfäden (Schüssen) (2', 2a') und einer Vielzahl an Kettfäden (Ketten) (3', 3a') besteht, wobei das Garnsystem (2', 2a', 3', 3a') mindestens ein wärmegeschrumpftes elastisches Kunststoffgarn, welches auch nach erfolgter Wärmeschrumpfbehandlung seine elastischen Eigenschaften zumindest teilweise beibehalten hat, aufweist oder hieraus besteht.

5. Verfahren zur Herstellung eines wärmegeschrumpften textilen Flächengebildes (1'), wobei das wärmegeschrumpfte textile Flächengebilde (1') aus einem das wärmegeschrumpfte textile Flächengebilde (1') ausbildenden Garnsystem (2', 2a', 3', 3a') mit einer Vielzahl an Schussfäden (Schüssen) (2', 2a') und einer Vielzahl an Kettfäden (Ketten) (3', 3a') besteht, wobei das Garnsystem (2', 2a', 3', 3a') mindestens ein wärmegeschrumpftes elastisches Kunststoffgarn, welches auch nach erfolgter Wärmeschrumpfbehandlung seine elastischen Eigenschaften zumindest teilweise beibehalten hat, aufweist oder hieraus besteht, wobei ein textiles Flächengebildes (1), wie in einem der Ansprüche 1 bis 3 definiert, mittels Wärmebehandlung geschrumpft wird.

6. Verwendung eines textilen Flächengebildes (1), wie in einem der Ansprüche 1 bis 3 definiert, im Bereich der Möbelindustrie, Automobilindustrie oder dergleichen.

7. Verwendung eines textilen Flächengebildes (1), wie in einem der Ansprüche 1 bis 3 definiert, zur Herstellung von Möbelelementen, insbesondere Sitz- und/oder Liegemöbelelementen, vorzugsweise Rückenlehnen, Sitzelementen und/oder Liegeelementen oder dergleichen, und/oder zur Herstellung von dekorativen Elementen, Hohlraumkanälen, Automobilzubehör oder dergleichen.

8. Verfahren zur Herstellung von Möbelelementen, insbesondere Sitz- und/oder Liegemöbelelementen, vorzugsweise Rückenlehnen, Sitzelementen und/oder Liegeelementen oder dergleichen, und/oder zur Herstellung von dekorativen Elementen, Hohlraumkanälen, Automobilzubehör oder dergleichen, wobei ein textiles Flächengebildes (1), wie in einem der Ansprüche 1 bis 3 definiert, auf eine Träger- und/oder Rahmenvorrichtung oder dergleichen aufgebracht und/oder hieran befestigt wird und nachfolgend das textile Flächengebilde (1) zumindest abschnitts- und/oder bereichsweise, vorzugsweise vollständig und/oder vollflächig wärmegeschrumpft wird.

9. Möbelelemente, insbesondere Sitz- und/oder Liegemöbelelemente, vorzugsweise Rückenlehnen und/oder Sitzelemente und/oder Liegeflächenelemente oder dergleichen, und/oder dekorative Elemente, Hohlraumkanäle, Automobilzubehör oder dergleichen, jeweils aufweisend mindestens ein textiles Flächengebilde (1), wie in einem der Ansprüche 1 bis 3 definiert.

## Claims

1. Textile sheet (1) in the form of a woven fabric with heat shrinkage properties and elastic properties
wherein the textile sheet (1) consists of a yarn system (2, 2a, 3, 3a) forming the textile sheet (1) with a plurality of weft threads (2, 2a) and a plurality of warp threads (3, 3a),
wherein the yarn system (2, 2a, 3, 3a) comprises or consists of at least one heat-shrinkable elastic plastic yarn which retains its elastic properties at least partially even after heat-shrinkage treatment,
wherein the heat-shrinkable elastic plastic yarn is based on a heat-shrinkable elastomeric and thermoplastic polyester,
wherein the yarn system (2, 2a, 3, 3a) is free of non-heatshrinkable elastic plastic yarns, and
the textile sheet (1) being elastic in the weft direction and in the warp direction, **characterized in that**
the heat-shrinkable elastic plastic yarn has an elongation at break of more than 55% at 20 °C, determined in accordance with DIN EN ISO 2062:2010-04.

2. Sheet according to claim 1,
the textile sheet (1) containing the heat-shrinkable elastic plastic yarn in an amount in the range from 1% by weight to 100% by weight, in particular in the range from 3% by weight to 95% by weight, preferably in the range from 5% by weight to 80% by weight, preferably in the range from 8% by weight to 50% by weight, particularly preferably in the range from 10% by weight to 40% by weight, very particularly preferably in the range from 15% by weight to 30% by weight, based on the textile sheet (1).

3. Sheet material according to claim 1 or 2,
wherein the heat-shrinkable elastic plastic yarn is formed as a monofilament or as a multifilament, preferably as a monofilament; and/or
wherein the heat-shrinkable elastic plastic yarn is formed as a staple fiber yarn.

4. Use of a textile sheet (1) as defined in any one of claims 1 to 3 for producing a heat-shrunk textile sheet (1'), wherein the heat-shrunk textile sheet (1') consists of a yarn system (2', 2a', 3', 3a') forming the heat-shrunk textile sheet (1'), with a plurality of weft threads (2', 2a') and a plurality of warp threads (3', 3a'), wherein the yarn system (2', 2a', 3', 3a') comprises or consists of at least one heat-shrunk elastic plastic yarn which has at least partially retained its elastic properties even after the heat-shrinkage treatment has taken place.

5. Method for producing a heat-shrunk textile sheet (1'), wherein the heat-shrunk textile sheet (1') consists of a yarn system (2', 2a', 3', 3a') forming the heat-shrunk textile sheet (1') with a plurality of weft threads (wefts) (2', 2a') and a plurality of warp threads (warps) (3', 3a'), wherein the yarn system (2', 2a', 3', 3a') comprises or consists of at least one heat-shrunk elastic plastic yarn which has at least partially retained its elastic properties even after heat-shrinkage treatment has taken place, wherein a textile sheet (1) as defined in any one of claims 1 to 3 is shrunk by means of heat treatment.

6. Use of a textile sheet (1) as defined in any one of claims 1 to 3 in the field of the furniture industry, automotive industry or the like.

7. Use of a textile sheet (1) as defined in any one of claims 1 to 3 for the manufacture of furniture elements, in particular seating and/or reclining furniture elements, preferably backrests, seating elements and/or reclining elements or the like, and/or for the manufacture of decorative elements, cavity channels, automotive accessories or the like.

8. Method for producing furniture elements, in particular seating and/or reclining furniture elements, preferably backrests, seating elements and/or reclining elements or the like, and/or for producing decorative elements, cavity channels, automotive accessories or the like, wherein a textile sheet (1), as defined in one of claims 1 to 3, is applied to a carrier and/or frame device or the like and/or is fastened thereto, and subsequently the textile sheet (1) is heat-shrunk at least in sections and/or regions, preferably completely and/or over the entire surface.

9. Furniture elements, in particular seating and/or reclining furniture elements, preferably backrests and/or seating elements and/or reclining surface elements or the like, and/or decorative elements, cavity channels, automotive accessories or the like, each comprising at least one textile sheet (1), as defined in any one of claims 1 to 3.

## Revendications

1. Structure textile plane (1) sous forme de tissu présentant des propriétés de thermorétraction et des propriétés élastiques
l'étoffe textile (1) étant constituée d'un système de fils (2, 2a, 3, 3a) formant l'étoffe textile (1) et comportant une pluralité de fils de trame (2, 2a) et une pluralité de fils de chaîne (3, 3a),
le système de fils (2, 2a, 3, 3a) présentant au moins un fil synthétique élastique thermorétractable, qui conserve au moins partiellement ses propriétés élastiques même après un traitement de thermorétraction, ou étant constitué de celui-ci,
dans lequel le fil plastique élastique thermorétractable est formé à base d'un polyester élastomère et thermoplastique thermorétractable,
dans lequel le système de fils (2, 2a, 3, 3a) est exempt de fils synthétiques élastiques non thermorétractables, et
la structure plane (1) étant réalisée de manière élastique dans le sens de la trame et dans le sens de la cha ne, **caractérisée en ce que**
le fil synthétique élastique thermorétractable présente un allongement à la rupture de plus de 55 % à 20 °C, déterminé selon la norme DIN EN ISO 2062:2010-04.

2. Les produits plats selon la revendication 1,
le produit plat (1) contenant le fil synthétique élastique thermorétractable en une quantité de l'ordre de 1 % en poids à 100 % en poids, en particulier de l'ordre de 3 % en poids à 95 % en poids, de préférence de l'ordre de 5 % en poids à 80 % en poids, de préférence de l'ordre de 8 % en poids à 50 % en poids, de manière particulièrement préférée de l'ordre de 10 % en poids à 40 % en poids, de manière tout particulièrement préférée de l'ordre de 15 % en poids à 30 % en poids, par rapport au produit plat (1).

3. Les produits plats selon la revendication 1 ou 2,
le fil synthétique élastique thermorétractable étant réalisé sous forme de monofilament ou de multifilament, de préférence sous forme de monofilament ; et/ou
le fil synthétique élastique thermorétractable étant conçu comme un fil de fibres discontinues.

4. Utilisation d'un produit textile plat (1), tel que défini dans l'une des revendications 1 à 3, pour la fabrication d'un produit textile plat thermorétracté (1'), le produit textile plat thermorétracté (1') étant constitué d'un système de fils (2', 2a', 3', 3a') avec une pluralité de fils de trame (trames) (2', 2a') et une pluralité de fils de cha ne (cha nes) (3', 3a'), le système de fils (2', 2a', 3', 3a') présentant ou étant constitué d'au moins un fil synthétique élastique thermorétracté qui a conservé au moins partiellement ses propriétés élastiques même après le traitement de thermorétraction effectué.

5. Procédé de fabrication d'un produit textile plat (1') thermorétracté, le produit textile plat (1') thermorétracté étant constitué d'un système de fils (2', 2a', 3', 3a') formant le produit textile plat (1') thermorétracté et comportant une pluralité de fils de trame (trames) (2', 2a') et une pluralité de fils de chaîne (chaînes) (3', 3a'), le système de fils (2', 2a', 3', 3a') présente au moins un fil synthétique élastique thermorétracté, qui a conservé au moins partiellement ses propriétés élastiques même après avoir subi un traitement de thermorétraction, ou est constitué de celui-ci, un produit textile plat (1) tel que défini dans l'une des revendications 1 à 3 étant thermorétracté au moyen d'un traitement thermique.

6. Utilisation d'un produit textile plat (1), tel que défini dans l'une des revendications 1 à 3, dans le domaine de l'industrie du meuble, de l'industrie automobile ou similaire.

7. Utilisation d'un produit textile plat (1), tel que défini dans l'une des revendications 1 à 3, pour la fabrication d'éléments de meubles, en particulier d'éléments de meubles d'assise et/ou de couchage, de préférence de dossiers, d'éléments d'assise et/ou d'éléments de couchage ou analogues, et/ou pour la fabrication d'éléments décoratifs, de canaux creux, d'accessoires automobiles ou analogues.

8. Procédé de fabrication d'éléments de meubles, en particulier d'éléments de meubles d'assise et/ou de couchage, de préférence de dossiers, d'éléments d'assise et/ou d'éléments de couchage ou analogues, et/ou de fabrication d'éléments décoratifs, de canaux creux, d'accessoires automobiles ou analogues, dans lequel une structure textile plane (1), telle que définie dans l'une des revendications 1 à 3, est appliquée sur un dispositif de support et/ou de cadre ou similaire et/ou y est fixée et, ensuite, la structure textile plane (1) est thermorétractée au moins par sections et/ou par zones, de préférence complètement et/ou sur toute sa surface.

9. Des éléments de mobilier, en particulier des éléments de mobilier d'assise et/ou de couchage, de préférence des dossiers et/ou des éléments d'assise et/ou des éléments de couchage ou analogues, et/ou des éléments décoratifs, des canaux creux, des accessoires automobiles ou analogues, présentant chacun au moins une structure textile plane (1), telle que définie dans l'une des revendications 1 à 3.
